# EUROPEAN PATENT APPLICATION

(11) **EP 4 583 610 A1**
(43) Date of publication of application: **09.07.2025**
(21) Application number: 22956909.0
(22) Date of filing: 31.08.2022
(51) Int. Cl.: H04W 72/12, H04W 72/04

(54) **METHOD AND APPARATUS FOR TRANSMISSION, DEVICE, STORAGE MEDIUM, AND PROGRAM PRODUCT**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); HUANG, Lei, Singapore 049483 (SG)
(74) Representative: RGTH
(86) International application number: PCT/CN2022/116351
(87) International publication number: WO 2024/045083

(57) **Abstract**

A method for transmission, an apparatus for transmission, a device, a storage medium and a program product, belong to the technical field of wireless communication. The method includes: monitoring or receiving (201), by a first STA device of a first BSS, a data unit on a first BSS channel, to obtain first monitoring or receiving condition information, where the first monitoring or receiving condition information is used to indicate transmission information of a first target station of a second BSS, which is monitored or received by the first STA device, and the first target station is a station whose initiated transmission influences on or interferes with a frame exchange in the first BSS by the first STA device, and reporting (202) the first monitoring or receiving condition information to a first AP device of the first BSS.

## Description

### TECHNICAL FIELD

The present application relates to the field of wireless communication technology, and in particular to a method for transmission, an apparatus for transmission, a device, a storage medium and a program product.

### BACKGROUND

In wireless local area network (WLAN), a target wake time (TWT) mechanism is used to support power saving in large-scale Internet of Things environments.

An operation of a restricted TWT is proposed in IEEE 802.11be, to allow access points (APs) to use enhanced medium access protection and resource reservation mechanisms to provide more predictable, lower worst-case delay and jitter, and higher reliability for transmission of low-latency services.

However, an overlapping basic service set (OBSS) is usually present in the Wi-Fi network. The OBSS will interfere with the restricted TWT operation in a BSS, thereby influencing the transmission delay under the restricted TWT operation.

### SUMMARY

Embodiments of the present application provide a method for transmission, an apparatus for transmission, a device, a storage medium, and a program product. The technical solutions are as follows.

In an aspect, the embodiments of the present application provide a method for transmission, the method is performed by a first station (STA) device of a first basic service set (BSS), the first STA device is a non-access point station (non-AP STA), and the method includes:
monitoring or receiving a data unit on a first BSS channel, to obtain first monitoring or receiving condition information, where the first monitoring or receiving condition information is used to indicate transmission information of a first target station of a second BSS, which is monitored or received by the first STA device, the first target station is a station whose initiated transmission influences on or interferes with a frame exchange in the first BSS by the first STA device; and
reporting the first monitoring or receiving condition information to a first AP device of the first BSS.

In an aspect, the embodiments of the present application provide a method for transmission, the method is performed by a first AP device of a first BSS and includes:
obtaining monitoring or receiving condition information, where the monitoring or receiving condition information is used to indicate transmission information of a target station of a second BSS, which is monitored or received by a station of the first BSS on a first BSS channel, and the target station is a station whose initiated transmission influences on or interferes with a frame exchange in the first BSS by the station of the first BSS; and
sharing information of a target resource and/or information of the target station with a second AP device of the second BSS according to the monitoring or receiving condition information, where the information of the target resource and/or the information of the target station is used for the second AP device to restrict transmission of a station of the second BSS on a target channel and/or at a target time, and the target channel and/or target time is a channel and/or a time on which media access protection needs to be performed of the first BSS.

In an aspect, the embodiments of the present application provide a method for transmission, the method is performed by a second AP device in a second BSS and includes:
receiving information of a target resource and/or information of a target station shared by a first AP device of a first BSS, where the information of the target resource and/or the information of the target station is shared by the first AP device according to monitoring or receiving condition information, the monitoring or receiving condition information is used to indicate transmission information of a target station of the second BSS, which is monitored or received by a station of the first BSS, and the target station is a station whose initiated transmission influences on or interferes with a frame exchange in the first BSS by the station of the first BSS; and
restricting transmission of a station of the second BSS on a target channel and/or at a target time according to the information of the target resource and/or the information of the target station, where the target channel and/or the target time is a channel and/or a time on which medium access protection needs to be performed of the first BSS.

In an aspect, the embodiments of the present application provide a method for transmission, the method is performed by a third STA device of a second BSS, the third STA device is a non-AP STA, and the method includes:
receiving a channel resource protection enable notification frame transmitted by a second AP device of the second BSS, where the channel resource protection enable notification frame is transmitted by the second AP device after receiving information of a target resource and/or information of a target station transmitted by a first AP device of a first BSS, the information of the target resource and/or the information of the target station is shared by the first AP device according to monitoring or receiving condition information, the monitoring or receiving condition information is used to indicate transmission information of a target station of the second BSS, which is monitored or received by a station of the first BSS, and the target station is a station whose initiated transmission influences on or interferes with a frame exchange in the first BSS by the station of the first BSS; and
restricting transmission of the third STA device on a target channel and/or at a target time according to the channel resource protection enable notification frame, where the target channel and/or the target time is a channel and/or a time on which medium access protection needs to be performed of the first BSS.

In another aspect, the embodiments of the present application provide an apparatus for transmission, the apparatus includes:
a monitoring module, configured to monitor or receive a data unit on a first BSS channel, to obtain first monitoring or receiving condition information, where the first monitoring or receiving condition information is used to indicate transmission information of a first target station of a second BSS, which is monitored or received by the first STA device, and the first target station is a station whose initiated transmission influences on or interferes with a frame exchange in the first BSS by the first STA device; and
a reporting module, configured to report the first monitoring or receiving condition information to the first AP device of the first BSS.

In another aspect, the embodiments of the present application provide an apparatus for transmission, the apparatus includes:
an information obtaining module, configured to obtain monitoring or receiving condition information, where the monitoring or receiving condition information is used to indicate transmission information of a target station of a second BSS, which is monitored or received by a station of the first BSS on the first BSS channel, and the target station is a station whose initiated transmission influences on or interferes with a frame exchange in the first BSS by the station of the first BSS; and
a transmitting module, configured to share information of a target resource and/or information of a target station with a second AP device of the second BSS according to the monitoring or receiving condition information, where the information of the target resource and/or the information of the target station is used for the second AP device to restrict transmission of a station of the second BSS on a target channel and/or at a target time, and the target channel and/or target time is a channel and/or a time on which media access protection needs to be performed of the first BSS.

In another aspect, the embodiments of the present application provide an apparatus for transmission, the apparatus includes:
a receiving module, configured to receive information of a target resource and/or information of a target station shared by a first AP device of a first BSS, where the information of the target resource and/or the information of the target station is shared by the first AP device according to monitoring or receiving condition information, the monitoring or receiving condition information is used to indicate transmission information of a target station of a second BSS monitored or received by a station of the first BSS, and the target station is a station whose initiated transmission influences on or interferes with a frame exchange in the first BSS by a station of the first BSS; and
a restricting module, configured to restrict transmission of a station of the second BSS on a target channel and/or at a target time according to the information of the target resource and/or the information of the target station, where the target channel and/or the target time is a channel and/or a time on which medium access protection needs to be performed of the first BSS.

In another aspect, the embodiments of the present application provide an apparatus for transmission, the apparatus includes:
a receiving module, configured to receive a channel resource protection enable notification frame transmitted by a second AP device of a second BSS, where the channel resource protection enable notification frame is transmitted by the second AP device after receiving information of a target resource and/or information of a target station transmitted by a first AP device of a first BSS, the information of the target resource and/or the information of the target station is shared by the first AP device according to monitoring or receiving condition information, the monitoring or receiving condition information is used to indicate transmission information of a target station of the second BSS, which is monitored or received by a station of the first BSS, and the target station is a station whose initiated transmission influences on or interferes with a frame exchange in the first BSS by the station of the first BSS; and
a restricting module, configured to restrict transmission of a third STA device on a target channel and/or at a target time according to the channel resource protection enable notification frame, where the target channel and/or the target time is a channel and/or a time on which medium access protection needs to be performed of the first BSS.

In yet another aspect, the embodiments of the present application provide a STA device, the STA device is a first STA device of a first BSS, the first STA device is a non-AP STA, and the STA device includes a processor, a memory, and a transceiver; where
the transceiver is configured to: monitor or receive a data unit on a first BSS channel, to obtain first monitoring or receiving condition information, where the first monitoring or receiving condition information is used to indicate transmission information of a first target station of a second BSS, which is monitored or received by the first STA device, and the first target station is a station whose initiated transmission influences on or interferes with a frame exchange in the first BSS by the first STA device; and report the first monitoring or receiving condition information to the first AP device of the first BSS.

In yet another aspect, the embodiments of the present application provide an AP device, the AP device is an AP device of a first BSS, and the AP device includes a processor, a memory, and a transceiver; where
the transceiver is configured to: obtain monitoring or receiving condition information, where the monitoring or receiving condition information is used to indicate transmission information of a target station of a second BSS, which is monitored or received by a station of the first BSS on a first BSS channel, the target station is a station whose initiated transmission influences on or interferes with a frame exchange in the first BSS by a station of the first BSS; and share information of a target resource and/or information of the target station with a second AP device of the second BSS according to the monitoring or receiving condition information, where the information of the target resource and/or the information of the target station is used for the second AP device to restrict transmission of a station of the second BSS on a target channel and/or at a target time, and the target channel and/or target time is a channel and/or a time on which media access protection needs to be performed of in the first BSS.

In yet another aspect, the embodiments of the present application provide an AP device, the AP device is an AP device of a second BSS, and the AP device includes a processor, a memory, and a transceiver; where
the transceiver is configured to receive information of a target resource and/or information of a target station shared by a first AP device of a first BSS, where the information of the target resource and/or the information of the target station is shared by the first AP device according to monitoring or receiving condition information, the monitoring or receiving condition information is used to indicate transmission information of the target station of the second BSS, which is monitored or received by a station of the first BSS, and the target station is a station whose initiated transmission influences on or interferes with a frame exchange in the first BSS by a station of the first BSS; and
the processor is configured to restrict transmission of a station of the second BSS on a target channel and/or at a target time according to the information of the target resource and/or the information of the target station, where the target channel and/or target time is a channel and/or a time on which medium access protection needs to be performed of the first BSS.

In yet another aspect, the embodiments of the present application provide a STA device, the STA device is a third STA device of a second BSS, the third STA device is a non-AP STA, and the STA device includes a processor, a memory, and a transceiver; where
the transceiver is configured to receive a channel resource protection enable notification frame transmitted by a second AP device of the second BSS, where the channel resource protection enable notification frame is transmitted by the second AP device after receiving information of a target resource and/or information of a target station transmitted by a first AP device of a first BSS, the information of the target resource and/or the information of the target station is shared by the first AP device according to monitoring or receiving condition information, the monitoring or receiving condition information is used to indicate transmission information of a target station of the second BSS, which is monitored or received by a station of the first BSS, and the target station is a station whose initiated transmission influences on or interferes with a frame exchange in the first BSS by a station of the first BSS; and
the processor is configured to restrict transmission of the third STA device on a target channel and/or at a target time according to the channel resource protection enable notification frame, where the target channel and/or the target time is a channel and/or a time on which medium access protection needs to be performed of the first BSS.

In yet another aspect, the embodiments of the present application provide a computer device, the computer device includes a processor, a memory and a transceiver, where a computer program is stored in the memory, and the computer program, when being executed by the processor, cause the computer device to perform the above-mentioned methods for transmission.

In still another aspect, the embodiments of the present application further provide a computer-readable storage medium, where a computer program is stored in the storage medium, the computer program, when being loaded and executed by a processor, cause a computer device to perform the above-mentioned methods for transmission.

In still yet another aspect, a computer program product is provided, where the computer program includes computer instructions which are stored in a computer-readable storage medium. A processor of a computer device reads the computer instructions from the computer-readable storage medium and executes the computer instructions, to cause the computer device to perform the above-mentioned methods for transmission.

In still yet another aspect, a chip is provided, where the chip includes a processor, configured to call a computer program from a memory and run the computer program, to cause a computer device equipped with the chip to perform the above-mentioned methods for transmission.

In still yet another aspect, a computer program is provided, where the computer program is executed by a processor of a computer device, to cause the computer device to perform the above-mentioned methods for transmission.

The technical solutions provided by the embodiments of the present application may bring out the following beneficial effects.

In a case where the first STA device (non-AP STA) of the first BSS monitors that the transmission initiated by the first target station of the second BSS influences on or interferes with the frame exchange by the first STA device, the first STA device may report the corresponding first monitoring or receiving condition information to the first AP device of the first BSS, so that the first AP device may subsequently take corresponding measures according to the first monitoring or receiving condition information to reduce the effect or interference of the first target station of the second BSS on the first STA device, thereby reducing the transmission delay of the first STA device.

### BRIEF DESCRIPTION OF THE DRAWINGS

In order to more clearly illustrate the technical solutions of the embodiments of the present application, the accompanying drawings to be used in the description of the embodiments will be briefly introduced below. Obviously, the drawings described below are only some embodiments of the present application. For the ordinary skilled in the art, other drawings may be obtained according to these drawings without creative effort.
FIG. 1 is a schematic diagram of a network architecture of a communication system provided by an embodiment of the present application.
FIG. 2 is a flowchart of a method for transmission provided by an embodiment of the present application.
FIG. 3 is a flowchart of a method for transmission provided by an embodiment of the present application.
FIG. 4 is a flowchart of a method for transmission provided by an embodiment of the present application.
FIG. 5 is a flowchart of a method for transmission provided by an embodiment of the present application.
FIG. 6 is a schematic diagram of a system framework for transmission involved in an exemplary embodiment of the present application.
FIG. 7 is a flowchart of a method for transmission provided by an embodiment of the present application.
FIG. 8 is a schematic diagram of a transmission scenario involved in the embodiment illustrated in FIG. 7.
FIG. 9 is a schematic diagram of a transmission scenario involved in the embodiment illustrated in FIG. 7.
FIG. 10 is a schematic diagram of a transmission scenario involved in the embodiment illustrated in FIG. 7.
FIG. 11 is a schematic diagram of a transmission scenario involved in the embodiment illustrated in FIG. 7.
FIG. 12 is a schematic diagram of a transmission scenario involved in the embodiment illustrated in FIG. 7.
FIG. 13 is a schematic diagram of a transmission scenario involved in the embodiment illustrated in FIG. 7.
FIG. 14 is a schematic diagram of a transmission scenario involved in the embodiment illustrated in FIG. 7.
FIG. 15 is a block diagram of an apparatus for transmission provided by an embodiment of the present application.
FIG. 16 is a block diagram of an apparatus for transmission provided by an embodiment of the present application.
FIG. 17 is a block diagram of an apparatus for transmission provided by an embodiment of the present application.
FIG. 18 is a block diagram of an apparatus for transmission provided by an embodiment of the present application.
FIG. 19 is a schematic structure diagram of a computer device provided by an embodiment of the present application.

### DETAILED DESCRIPTION

In order to make the purposes, technical solutions and advantages of the present application clearer, the embodiments of the present application will be further described in detail below in conjunction with the accompanying drawings.

The network architecture and service scenarios described in the embodiments of the present application are intended to more clearly illustrate the technical solutions of the embodiments of the present application, and do not constitute limitations for the technical solutions provided in the embodiments of the present application. The ordinary skilled in the art may appreciate that with the evolution of the network architecture and the emergence of new service scenarios, the technical solutions provided in the embodiments of the present application are also applicable to similar technical problems.

The technical solutions of the embodiments of the present application may be applied to various communication systems, such as wireless local area networks (WLAN), wireless fidelity (WiFi) or other communication systems.

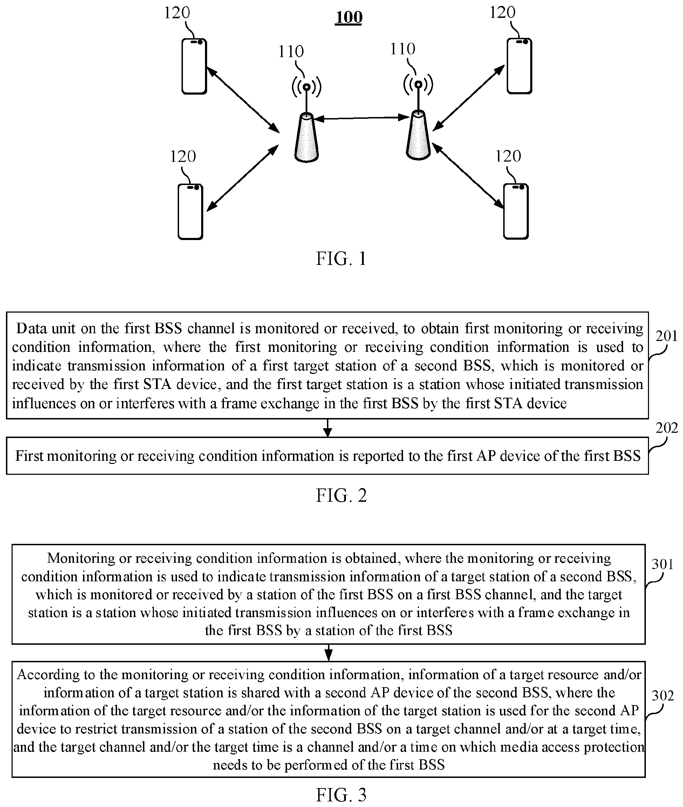

For example, referring to FIG. 1, which shows a schematic diagram of a network architecture of a communication system 100 provided by an embodiment of the present application. The communication system 100 may include an access point 110 (i.e., AP) and a station 120 (i.e., STA) accessing a network via the access point 110.

In some scenarios, an AP is also called an AP STA, that is, in a sense, the AP is also a STA.

In some scenarios, the STA is also called a non-AP STA.

The communication in the communication system 100 may be communication between a AP and a non-AP STA, communication between a non-AP STA and a non-AP STA, or communication between a STA and a peer STA. The peer STA may refer to a device that performs peer-to-peer communication with the STA. For example, the peer STA may be an AP or a non-AP STA.

The AP is equivalent to a bridge for connecting a wired network and a wireless network. Its main function is to connect various wireless network clients together and then access the wireless network access to Ethernet. An AP device may be a terminal device with a Wi-Fi chip (e.g., a mobile phone) or a network device with a Wi-Fi chip (e.g., a wireless router, a wireless switch or a wireless relay device).

It should be understood that the role of a STA in the communication system is not fixed. For example, in some scenarios, in a case where a mobile phone is connected to a router, the mobile phone is the non-AP STA. In a case where the mobile phone serves as a hotspot for other mobile phones, the mobile phone plays a role of the AP.

The AP and the non-AP STA may be devices used in Internet of Vehicles, Internet of Things (IoT) nodes and sensors used in the IoT, smart cameras, smart remote controls, smart water meters or smart electricity meters used in smart homes, and sensors used in smart cities.

In some embodiments, the non-AP STA may support the 802.11be standard. The non-AP STA may also support various current and future 802.11 family wireless local area networks (WLAN) standards, such as 802.11ax, 802.11ac, 802.11n, 802.11g, 802.11b and 802.11a.

In some embodiments, the AP may be a device that supports the 802.11be standard. The AP may also be a device that supports various current and future 802.11 family WLAN standards, such as 802.11ax, 802.11ac, 802.11n, 802.11g, 802.11b and 802.11a.

In the embodiments of the present application, the STA may be a device that supports the WLAN or WiFi technology, such as a mobile phone, a pad, a computer, a virtual reality (VR) device, an augmented reality (AR) device, a wireless device in industrial control, a set-top box, a wireless device in self-driving, an in-vehicle communication device, a wireless device in remote medical, a wireless device in smart grid, a wireless device in transportation safety, a wireless device in smart city, or a wireless device in smart home, a wireless communication chip/ application specific integrated circuit (ASIC)/ system on chip (SOC).

Frequency bands supported by the WLAN technology may include but are not limited to: low frequency bands (e.g., 2.4 GHz, 5 GHz, and 6 GHz), high frequency bands (e.g., 45 GHz, and 60 GHz).

FIG. 1 exemplarily illustrates an AP STA and two non-AP STAs. Optionally, the communication system 100 may include a plurality of AP STAs and other numbers of non-AP STAs, which is not limited in the embodiments of the present application.

It should be understood that a device with a communication function in a network/system in the embodiments of the present application may be referred to as a communication device. Taking the communication system 100 shown in FIG. 1 as an example, the communication device may include an access point 110 and a station 120 with the communication function. The access point 110 and the station 120 may be the specific devices described above, which will not be repeated here. The communication device may further include other devices in the communication system 100, such as a network controller, a gateway and other network entities, which are not limited in the embodiments of the present application.

It should be understood that, the terms "system" and "network" herein are often used interchangeably herein. The term "and/or" herein is merely an association relationship for describing associated objects, and indicates that there may be three relationships. For example, "A and/or B" may represent that: A exists alone, both A and B exist, and B exists alone. In addition, the character "/" herein generally indicates that associated objects before and after this character are in an "or" relationship.

It should be understood that, the term "indicate" and variants thereof mentioned in the embodiments of the present application may mean a direct indication or an indirect indication, or represent that there is an association relationship. For example, A indicating B may mean that A directly indicates B (e.g., B may be obtained through A); or mean that A indirectly indicates B (e.g., A indicates C, and B may be obtained through C); or mean that there is an association relationship between A and B.

In the description of the embodiments of the present application, the term "correspond" and variants thereof may mean that there is a relationship of direct correspondence or indirect correspondence between the two, or there is an association relationship between the two, or there is a relationship of indicating and being indicated, or configuring and being configured, or the like.

In the embodiments of the present application, "predefined" may be implemented by pre-saving corresponding codes, tables or other methods used for indicating related information in a device (for example, including the access point and the station), which is not limited in the present application. For example, predefined may mean defined in a protocol.

In the embodiments of the present application, the "protocol" may refer to a standard protocol in the communication field, for example, it may include a WiFi protocol and related protocols used in future WiFi communication systems, which is not limited in the present application.

The access point 110 and the station 120 may be associated and communicate with each other in virtue of the wireless local area network technology. The association refers to a process of wireless link service negotiation between the STA and the AP, which is used to establish a wireless link between the STA and the AP.

In TWT, a schedule is established between a terminal and an AP (the schedule is negotiated by the terminal and the AP), and the schedule is composed of TWT time periods. After the time period negotiated by the terminal and the AP arrives, the terminal will wake up and wait for a trigger frame transmitted by the AP to perform once data exchange. After the transmission is completed, the terminal returns to dormancy state. Each terminal may negotiate independently with the AP, and each terminal has a separate TWT time period.

In the TWT, the AP is allowed to manage behaviors of the BSS to mitigate competition between stations and reduce awake time of stations in power management mode, which is achieved by performing operating in non-overlapping time and/or frequency domains by stations and concentrating frame exchanges in predefined service periods. Therefore, to ensure the application effect of the TWT, the AP generally requires that all associated stations within the BSS join the TWT for scheduling by the AP. According to the TWT protocol of 11ax, High-Efficiency (HE, specifically 11ax) AP will request all associated stations that declare supporting the TWT to participate in the TWT. After receiving the AP's indication to join the TWT, non-AP stations should perform an individual TWT protocol negotiation, or join a broadcast TWT. In addition, the TWT service period (SP) includes a trigger-enabled SP and a non-trigger-enabled SP, and the TWT scheduling AP performs scheduling by transmitting a trigger frame in the trigger-enabled SP. In this case, 11ax stipulates that TWT reserved stations cannot transmit a frame to TWT scheduling AP outside the broadcast TWT SP, and in trigger-enabled broadcast TWT, TWT reserved stations cannot transmit a frame that does not carry a high efficiency trigger-based physical layer protocol data unit (HE TB PPDU) to the TWT scheduling AP.

An operation of a restricted TWT is proposed in the IEEE 802.11be, to allow APs to use enhanced medium access protection and resource reservation mechanisms to provide more predictable, lower worst-case delay and jitter, and higher reliability for transmission of low-latency services. At present, the restricted TWT mainly adds two channel access rules in terms of channel access: in a case where the TXOP is obtained outside the restricted TWT service period, the non-AP STA with extremely high throughput (EHT), as an owner of the transmission opportunity (TXOP), should ensure that its TXOP is terminated before the start of any restricted TWT service period; the EHT AP will schedule a quiet interval overlapping with the restricted TWT service period to shield operations of remaining STAs that support the quiet element within the TWT SP, but the shielding operations within the quiet interval is invalid for the Non-AP EHT STA.

The enhanced medium access protection operation, defined in IEEE 802.11be for the restricted TWT, is mainly to restrict behaviors of stations of the BSS that perform the restricted TWT operations. Since the overlapping BSS (OBSS) often exist in the WIFI network, the OBSS will interfere with the restricted TWT operations in the BSS, interfering with the AP or restricted TWT member stations obtaining transmission opportunities timely manner for transmitting low-latency service data during the restricted TWT service period. Therefore, a coordination mechanism between multiple APs or multiple BSSs needs to be defined to perform medium protection on transmission during the restricted TWT service period in the BSS. The main issues that need to be solved are listed below.

1) How to distinguish the interference link, especially how to distinguish the OBSS STA, where the OBSS STA refers to a STA of the OBSS whose transmission will interfere with transmission of the AP or r-TWT STA of the BSS where the restricted TWT operate located during the restricted TWT service period.

2) How to control the behavior of OBSS STA from the perspective of protecting the transmission of low-latency services by AP or restricted TWT member stations during the restricted TWT service period.

3) How to reduce effects on the transmission between stations of the OBSS while protecting the transmission of low-latency service data during the restricted TWT service period. For example, if the AP and the r-TWT STA of the BSS where the restricted TWT operation is located are not in the OBSS overlapping area, the OBSS AP may be allowed to initiate downlink transmission with the OBSS STA during the restricted TWT service period.

Referring to FIG. 2, a flowchart of a method for transmission provided by an embodiment of the present application is illustrated. The method may be performed by a first station (STA) device of a first basic service set (BSS), where the first STA device is a non-AP STA. The first BSS includes a first AP device and at least one non-AP STA device associated with the first AP device, the first STA device is any one of the at least one non-AP STA device associated with the first AP device, the non-AP STA device may be one of the stations 120 in the network architecture shown in FIG. 1, and the AP device may be the access point 110 in the network architecture shown in FIG. 1. The method may include the following steps.

Step 201, a data unit on the first BSS channel is monitored or received, to obtain first monitoring or receiving condition information, where the first monitoring or receiving condition information is used to indicate transmission information of a first target station of a second BSS, which is monitored or received by the first STA device, and the first target station is a station whose initiated transmission influences on or interferes with a frame exchange in the first BSS by the first STA device.

In some embodiments, the first BSS channel is a channel used by the first STA device for competition access and transmission.

The second BSS is a BSS other than the first BSS. For example, the second BSS may be an OBSS of a station of the first BSS, or a BSS operating on the same channel with the first BSS.

The solutions shown in the embodiments of the present application is applicable to a scenario of which the first STA device performs channel competition or transmission on the first BSS channel during a specified time period, for example, a scenario of which the first STA device performs the channel competition or transmission based on an r-TWT mechanism.

Optionally, the data unit may be a physical layer protocol data unit (presentation protocol data unit, PPDU).

Step 202, the first monitoring or receiving condition information is reported to the first AP device of the first BSS.

In some embodiments, the first AP device may subsequently take corresponding measures according to the first monitoring or receiving condition information to reduce signal interference to the first STA device caused by the transmission of the first target station of the second BSS, which includes but is not limited to restricting transmission of a station of the second BSS, adjusting the first BSS channel used by the first STA device, adjusting the time (e.g., r-TWT) for the first STA device to perform the channel competition or transmission.

The signal interference caused by the transmission refers to the influence or interference caused by an initiated transmission on a frame exchange by other stations.

For example, the first monitoring or receiving condition information is used for the first access point (AP) device of the first BSS to share information of a target resource and/or information of a target station with a second AP device of the second BSS, the information of the target resource and/or the information of the target station is used for the second AP device to restrict transmission of a station of the second BSS on a target channel and/or at a target time, and the target channel and/or the target time is a channel and/or a time on which media access protection needs to be performed of the first BSS.

To sum up, in the solutions shown in the embodiment of the present application, in a case where the first STA device (non-AP STA) of the first BSS monitors that the transmission initiated by the first target station of the second BSS influences on or interferes with the frame exchange by the first STA device, the first STA device may report the corresponding first monitoring or receiving condition information to the first AP device of the first BSS, so that the first AP device subsequently takes the corresponding measures according to the first monitoring or receiving condition information to reduce the effect or interference of the first target station of the second BSS on the first STA device, thereby reducing the transmission delay of the first STA device.

Referring to FIG. 3, a flowchart of a method for transmission provided by an embodiment of the present application is illustrated. The method may be performed by a first AP device of a first BSS, where first BSS includes the first AP device and at least one non-AP STA device associated with the first AP device. The non-AP STA device may be one of the stations 120 in the network architecture shown in FIG. 1, and the AP device may be the access point 110 in the network architecture shown in FIG. 1. The method may include the following steps.

Step 301, monitoring or receiving condition information is obtained, where the monitoring or receiving condition information is used to indicate transmission information of a target station of a second BSS, which is monitored or received by a station of the first BSS on a first BSS channel, and the target station is a station whose initiated transmission influences on or interferes with a frame exchange in the first BSS by a station of the first BSS.

In some embodiments, the monitoring or receiving condition information obtained by the first AP device may include monitoring or receiving condition information obtained by a non-AP STA of the first BSS monitoring or receiving a data unit, and/or monitoring or receiving condition information obtained by the first AP device itself monitoring or receiving a data unit.

Correspondingly, the station of the first BSS may include a non-AP STA of the first BSS (e.g., the first STA device in the embodiment shown in FIG. 2) and/or a first AP device.

Step 302, according to the monitoring or receiving condition information, information of a target resource and/or information of a target station is shared with a second AP device of the second BSS, where the information of the target resource and/or the information of the target station is used for the second AP device to restrict transmission of a station of the second BSS on a target channel and/or at a target time, and the target channel and/or the target time is a channel and/or a time on which media access protection needs to be performed of the first BSS.

There is a direct communication connection or an indirect communication connection established between the first AP device and the second AP device, that is, data communication may be performed between the first AP device and the second AP device.

In some embodiments, the target channel may include all or part of channels used by a station of the first BSS. For example, the target channel may include all or part of channels used by a station of the first BSS that has monitored influence or interference from the second BSS.

The target time may be a time when a station of the first BSS may perform channel competition or transmission.

To sum up, in the solution shown in the embodiments of the present application, in a case where the station of the first BSS monitors that the transmission initiated by the target station of the second BSS influences or interferes with the frame exchange by the station of the first BSS, the first AP device of the first BSS may share the information of the target resource and/or the information of the target station with the second AP device according to the corresponding monitoring or receiving condition information, so that the second AP device may restrict the transmission of the second BSS, to reduce the influences or interferences of the station of the second BSS on the station of the first BSS, thereby reducing the transmission delay of the station of the first BSS.

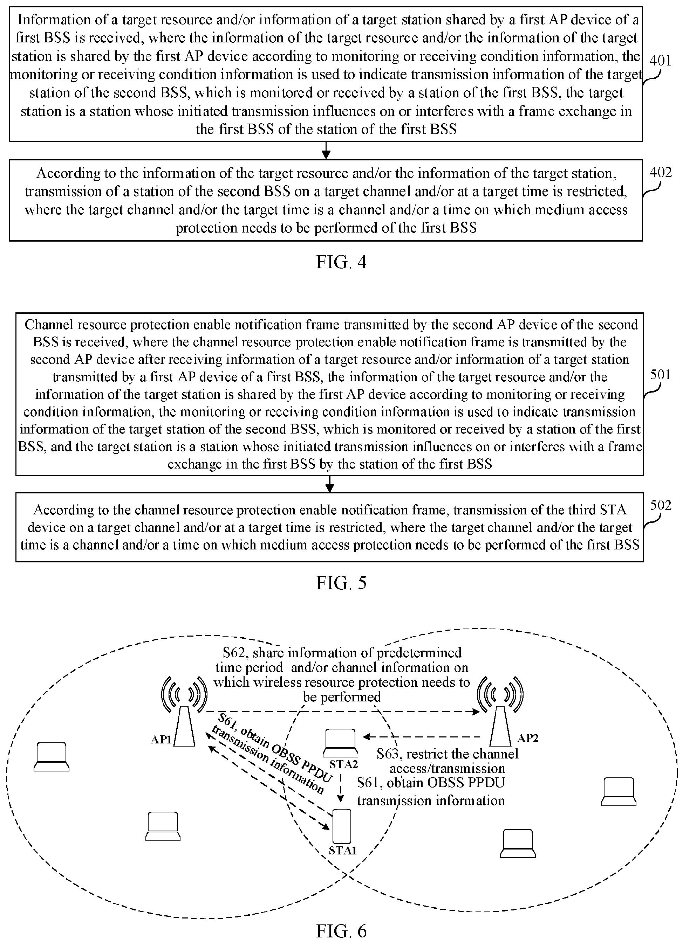

Referring to FIG. 4, a flowchart of a method for transmission provided by an embodiment of the present application is illustrated. The method may be applied to a second AP device of a second BSS, where the second BSS includes the second AP device and at least one non-AP STA device associated with the second AP device, the non-AP STA device may be one of the stations 120 in the network architecture shown in FIG. 1, and the AP device may be the access point 110 in the network architecture shown in FIG. 1. The method may include the following steps.

Step 401, information of a target resource and/or information of a target station shared by a first AP device of a first BSS is received, where the information of the target resource and/or the information of the target station is shared by the first AP device according to monitoring or receiving condition information, the monitoring or receiving condition information is used to indicate transmission information of the target station of the second BSS, which is monitored or received by a station of the first BSS, the target station is a station whose initiated transmission influences on or interferes with a frame exchange in the first BSS of the station of the first BSS.

Step 402, according to the information of the target resource and/or the information of the target station, transmission of a station of the second BSS on a target channel and/or at a target time is restricted, where the target channel and/or the target time is a channel and/or a time on which medium access protection needs to be performed of the first BSS.

The transmission of the station of the second BSS on the target channel and/or at the target time being restricted may refer to restricting channel competition, transmission and other behaviors of the station of the second BSS on the target channel and/or at the target time.

The transmission of the station of the second BSS on the target channel and/or at the target time being restricted may refer to restricting transmission of all or part of stations of the second BSS (e.g., stations of the second BSS whose effect or interference of initiated transmission is monitored or received by a station of the first BSS) on the target channel and/or at the target time.

To sum up, in the solution shown in the embodiments of the present application, in a case where the station of the first BSS monitors that the transmission initiated by the target station of the second BSS influences on or interferes with the frame exchange by the station of the first BSS, the first AP device of the first BSS may share the information of the target resource and/or the information of the target station with the second AP device according to the corresponding monitoring or receiving condition information, and the second AP device may restrict the transmission in the second BSS, to reduce the effect or interference of the station of the second BSS on the station of the first BSS, thereby reducing the transmission delay of the station of the first BSS.

Referring to FIG. 5, a flowchart of a method for transmission provided by an embodiment of the present application is illustrated. The method may be performed by a third STA device of a second BSS, the second BSS includes a second AP device and at least one non-AP STA device associated with the second AP device, the third STA device is a non-AP STA, i.e., one of the at least one non-AP STA associated with the second AP device. The non-AP STA device may be one of the stations 120 in the network architecture shown in FIG. 1, and the AP device may be the access point 110 in the network architecture shown in FIG. 1. The method may include the following steps.

Step 501, a channel resource protection enable notification frame transmitted by the second AP device of the second BSS is received, where the channel resource protection enable notification frame is transmitted by the second AP device after receiving information of a target resource and/or information of a target station transmitted by a first AP device of a first BSS, the information of the target resource and/or the information of the target station is shared by the first AP device according to monitoring or receiving condition information, the monitoring or receiving condition information is used to indicate transmission information of the target station of the second BSS, which is monitored or received by a station of the first BSS, and the target station is a station whose initiated transmission influences on or interferes with a frame exchange in the first BSS by the station of the first BSS.

Step 502, according to the channel resource protection enable notification frame, transmission of the third STA device on a target channel and/or at a target time is restricted, where the target channel and/or the target time is a channel and/or a time on which medium access protection needs to be performed of the first BSS.

To sum up, in the solution shown in the embodiment of the present application, in a case where the station of the first BSS monitors that the transmission initiated by the target station of the second BSS influences on or interferes with the frame exchange by the station of the first BSS, the first AP device of the first BSS may share the information of the target resource and/or the information of the target station with the second AP device according to the corresponding monitoring or receiving condition information. After receiving the information of the target resource and/or the information of the target station, the second AP device may indicate that the third STA device of the second BSS restricts the transmission on the target channel and/or at the target time through the channel resource protection enable notification frame, so as to reduce the effect or interference of the station of the second BSS on the station of the first BSS, thereby reducing the transmission delay of the station of the first BSS.

Based on the solutions shown in FIGS. 2 to 5 above, taking the second BSS being an OBSS of the first BSS as an example, and referring to FIG. 6, a schematic diagram of a system framework for transmission involved in an exemplary embodiment of the present application is illustrated. As shown in FIG. 6, the system involved in the embodiment of the present application includes two BSSs, one is BSS1 corresponding to AP1 and its associated station STA1, and another is BSS2 corresponding to AP2 and its associated station STA2, where BSS2 is an OBSS of BSS1. To solve the OBSS interference problem, resource protection is performed on transmission between specific stations of BSS1 during a predetermined time period, and the following method is adopted.

S61, BSS transmission-related stations (such as AP1 and STA1 in FIG. 6) that need to perform wireless resource protection during a predetermined time period obtain specific information related to OBSS transmission (corresponding to the above-mentioned monitoring and receiving condition information) by monitoring or receiving an OBSS PPDU.

STA1 may report the specific information related to the OBSS transmission to AP1, which is obtained by itself monitoring or receiving.

S62, AP1 shares information of predetermined time period on which wireless resource protection needs to be performed (corresponding to the above-mentioned information of the target time, such as the r-TWT SP information corresponding to STA1) and/or channel information on which wireless resource protection needs to be performed (corresponding to the above-mentioned target channel) with AP2 (which is equivalent to the first AP device sharing the information of the target resource and/or the information of the target station with the second AP device).

Optionally, AP1 may further share a station involved in the OBSS on which channel access and transmission need to be restricted (such as information of stations involved in specific information related to OBSS transmission fed back by STA1 and/or AP1) with AP2.

S63, after receiving the above information shared by AP1, AP2 restricts the channel access and transmission of the station involved in the OBSS (i.e., the related station associated with AP2, such as STA2) before a start time of the predetermined time period and/or during the predetermined time period.

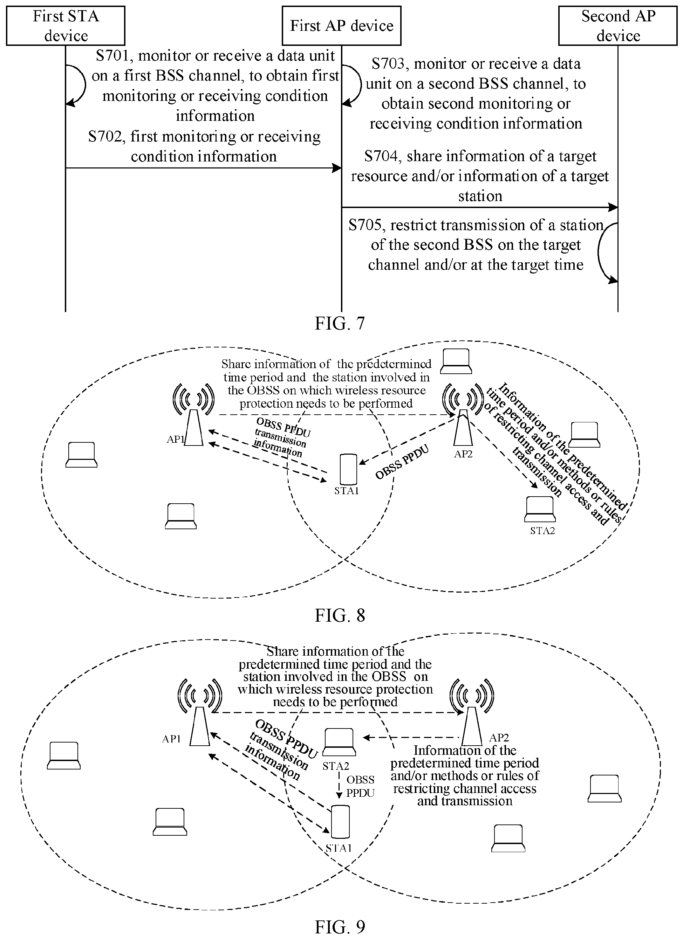

Based on the solutions shown in FIGS. 2 to 5 above, referring to FIG. 7, a flowchart of a method for transmission provided by an embodiment of the present application is illustrated. The method may be performed by a first STA device of a first BSS, a first AP device of the first BSS, a second AP device of a second BSS, and a non-AP STA device of the second BSS. The first STA device is a non-AP STA, the non-AP STA device may be one of the stations 120 in the network architecture shown in FIG. 1, and the AP device may be the access point 110 in the network architecture shown in FIG. 1. The method may include the following steps.

Step 701, the first STA device monitors or receives a data unit on a first BSS channel, to obtain first monitoring or receiving condition information.

The first monitoring or receiving condition information is used to indicate transmission information of a first target station of the second BSS, which is monitored or received by the first STA device, and the first target station is a station whose initiated transmission influences on or interferes with a frame exchange in the first BSS by the first STA device.

In other words, the first monitoring or receiving condition information is used to indicate the first target station monitored or received by the first STA device, where the transmission initiated by the second BSS influences on or interferes with the first STA device.

In a scenario where the first STA device performs channel competition or transmission on the first BSS channel during a specified time period, the first STA device may monitor or receive the data unit on the first BSS channel during the specified time period; optionally, at other times outside the specified time period, the first STA device may not perform the step of monitoring or receiving the data unit.

For example, in a scenario where the first STA device performs the channel competition or transmission based on a r-TWT mechanism, the first STA device monitors or receives the data unit during a r-TWT SP period of the first STA device, and does not monitor or receive the data unit outside the r-TWT SP period.

The data unit may be a PPDU.

The second BSS may be an OBSS of the first BSS, or may be another BSS operating on the same channel with the first BSS.

In some embodiments, the first monitoring or receiving condition information is used for the first access point (AP) device of the first BSS to share the information of a target resource and/or the information of a target station with the second AP device of the second BSS, where the information of the target resource and/or the information of the target station is used for the second AP device to restrict transmission of a station of the second BSS on a target channel and/or at a target time, the target channel and/or the target time is a channel and/or a time on which media access protection needs to be performed of the first BSS, for example, may be a channel and/or a time corresponding to the effect or interference caused by the transmission initiated by the station of the second BSS on the station of the first BSS.

In some embodiments, the first monitoring or receiving condition information includes station information of the first target station.

The station information may include at least one of information related to transmission of the monitored or received data unit, or information related to a station corresponding to the monitored or received data unit.

In some embodiments, in a case where the data unit is the PPDU, the station information may include PPDU transmission information corresponding to the PPDU, the PPDU transmission information includes at least one of the following transmission sub-information:
a transmission type, a BSS colour, a BSS identifier (BSSID), a sender association identifier (AID), a sender partial AID, a sender media access control (MAC) address, a receiver association identifier (AID), receiver partial AID, or a receiver MAC address; where the transmission type includes uplink transmission, downlink transmission or point-to-point (P2P) transmission.

In some embodiments, when the first STA device monitors or receives the data unit, in a case where BSS identifier information included in a monitored or received first PPDU is different from BSS identifier information of the first BSS, the first STA device determines that station information carried by the first PPDU includes information of the first target station, that is, a station corresponding to the first PPDU is the first target station.

When the first STA device monitors or receives the data unit on the first BSS channel, if the identifier information of the BSS corresponding to the monitored or received PPDU is different from the identifier information of a current BSS, it means that the first STA device receives a PPDU transmitted by a station of other BSS (e.g., an OBSS). That is, in this case, transmission initiated by the station of other BSS influences on or interferes with the channel competition or transmission of the first STA device.

In some embodiments, the BSS identifier information includes at least one of: a BSSID or a BSS color.

For example, after the first STA device monitors or receives a PPDU on the first BSS channel, if a BSSID in the PPDU is different from a BSSID of the first BSS, it may be determined that the PPDU transmitted by a station of the other BSS is received.

For another example, after the first STA device monitors or receives a PPDU on the first BSS channel, if a BSS color in the PPDU is different from a BSS color of the first BSS, it may be determined that the PPDU transmitted by a station of the other BSS is received.

For yet another example, after the first STA device monitors or receives a PPDU on the first BSS channel, if a BSSID in the PPDU is different from a BSSID of the first BSS, and a BSS color in the PPDU is different from a BSS color of the first BSS, it may be determined that the PPDU transmitted by the station of the other BSS is received.

Step 702, the first STA device reports the first monitoring or receiving condition information to the first AP device of the first BSS; correspondingly, the first AP device receives the first monitoring or receiving condition information.

For example, in response to a requirement of performing resource protection on transmission between certain stations of the BSS1 during a predetermined time period (e.g., an r-TWT SP period), stations related to the transmission in the BSS1, such as AP1 and/or non-AP stations associated with AP1 (such as STA11, STA12), monitor in real time before or during the predetermined time period on which resource protection needs to be performed and obtain PPDU transmission information of PPDUs that may interfere with their own transmissions, such as peer-to-peer (P2P) transmission information, or uplink and downlink PPDU transmission information within the BSS, or PPDU transmission information of PPDUs from the OBSS, including received PPDU related information of a PPDU that cannot be determined as an intra-BSS PPDU. The specific content may be as follows.
1) For the uplink or downlink transmission that needs to be protected, AP1 and STA11 monitor the network during a specific time period (e.g., the r-TWT SP period used by uplink and downlink transmission of STA11). In a case of receiving an inter-BSS PPDU or other OBSS PPDUs that cannot be determined as the intra-BSS PPDU, the OBSS transmission specific information (i.e., the PPDU transmission information of the PPDU from the OBSS) carried by the PPDU is recorded, optionally, including BSS identifier information (such as a BSSID, a BSS Color) of the sender, sender identifier information (such as the sender AID, the sender partial AID, the sender MAC address), receiver identifier information (such as the receiver AID, the receiver partial AID, the receiver MAC address), uplink or downlink marking information, whether it is P2P transmission, and other information. After counting or processing OBSS transmission specific information corresponding to the OBSS PPDU received during the specific time period, STA11 will report it to the associated AP1 in real time or periodically; in this case, AP1 counts or processes the OBSS transmission specific information corresponding to the OBSS PPDU received during the specific time period.
2) For peer-to-peer transmissions that need to be protected, STA11 and STA12 related to the transmission monitor the network during the specific time period. In a case of receiving an inter-BSS PPDU or other OBSS PPDU that cannot be determined as the intra-BSS PPDU, the OBSS transmission specific information carried by the PPDU is recorded. After counting or processing the OBSS transmission specific information corresponding to the OBSS PPDU received during the specific time period, STA11 and STA12 will report it to the associated AP1 in real time or periodically.

The first STA device may report the first monitoring or receiving condition information to the first AP device via a report message frame.

For example, the report message frame for reporting the first monitoring or receiving condition information includes PPDU transmission information carried by a PPDU monitored or received by the first STA device.

In some embodiments, the report message frame comprises a PPDU transmission information element, the PPDU transmission information element includes: a PPDU transmission information control field, and a PPDU transmission information field;
the PPDU transmission control information field is used to indicate an information format of the PPDU transmission information field; for example, the PPDU transmission information control field may indicate what information is included in the subsequent PPDU transmission information field, and whether the corresponding PPDU is a PPDU transmitted by a station of the OBSS.
the PPDU transmission information field is used to carry PPDU transmission information.

In some embodiments, the PPDU transmission control information field includes at least one of the following information:
PPDU type indication information, used to indicate whether the monitored or received PPDU comes from a BSS other than the first BSS;
the amount of PPDU transmission information; or
a bitmap of PPDU transmission information, used to indicate an information type of transmission sub-information includes in the PPDU transmission information.

In some embodiments, each bit position in the bitmap of the PPDU transmission information corresponds to a type of transmission sub-information, and a bit value of each bit position in the bitmap of the PPDU transmission information is used to indicate whether corresponding transmission sub-information exists in the PPDU transmission information field.

In the embodiment of the present application, the PPDU transmission information element is used to indicate related transmission information of the PPDU monitored or received by the station, such as, related PPDU transmission information of the OBSS PPDU or the intra-BSS PPDU monitored or received by the station. A format of the PPDU transmission information element may be defined as shown in Table 1 below.

**Table 1**

| | | | | |
|---|---|---|---|---|
| Element ID (1 octet) | Length (1 octet) | Element ID extension (1 octet) | PPDU transmission information control (2 octets) | PPDU transmission information table (Variable number of octets) |

The format of the PPDU transmission information control field in Table 1 above may be as shown in Table 2 below.

**Table 2**

| | | |
|---|---|---|
| OBSS/ Intra-BSS PPDU (1 bit) | the number of PPDU transmission information (7 bits) | PPDU transmission information indication bitmap (8 bits) |

In Table 2, the OBSS/Intra-BSS PPDU subfield indicates whether the PPDU is an OBSS PPDU or an Intra-BSS PPDU. For example, in a case where it is set to 1, it indicates that the PPDU is the OBSS PPDU, or in a case where it is set to 0, it indicates that the PPDU is the Intra-BSS PPDU.

The number of PPDU transmission information subfield may indicate the number of PPDU transmission information carried by the PPDU transmission information field.

Optionally, a format definition of the PPDU transmission information indication bitmap subfield may be defined as shown in Table 3.

**Table 3**

| A bit position of the PPDU transmission information indication bitmap subfield | Meaning of the bit value corresponding to the bit position |
|---|---|
| No. 1 | If it is set to 1, it indicates that the BSS Color subfield exists in the PPDU transmission information field; if it is set to 0, it indicates that the BSS Color subfield does not exist. |
| No. 2 | If it is set to 1, it indicates that the BSSID subfield exists in the PPDU transmission information field. If set to 0, it indicates that the BSSID subfield does not exist. |
| No. 3 | If it is set to 1, it indicates that the sender partial AID subfield exists in the PPDU transmission information field; if it is set to 0, it indicates that the BSSID subfield does not exist. |
| No. 4 | If it is set to 1, it indicates that the sender AID subfield exists in the PPDU transmission information field; if it is set to 0, it indicates that the sender AID subfield does not exist. |
| No. 5 | If it is set to 1, it indicates that the sender MAC address subfield exists in the PPDU transmission information field; if it is set to 0, it indicates that the sender MAC address subfield does not exist. |
| No. 6 | If it is set to 1, it indicates that the receiver partial AID subfield exists in the PPDU transmission information field; if it is set to 0, it indicates that the receiver partial AID subfield does not exist. |
| No. 7 | If it is set to 1, it indicates that the receiver AID subfield exists in the PPDU transmission information field; if it is set to 0, it indicates that the receiver AID subfield does not exist. |
| No. 8 | If it is set to 1, it indicates that the receiver MAC address subfield exists in the PPDU transmission information field; if it is set to 0, it indicates that the receiver MAC address subfield does not exist. |

A format of the PPDU transmission information field in Table 1 above may be defined as shown in Table 4 below, which carries zero or multiple PPDU transmission information.

**Table 4**

| | | |
|---|---|---|
| PPDU transmission information 1 | ... | PPDU transmission information n |

A format of the PPDU transmission information in Table 4 may be defined as shown in Table 5.

**Table 5**

| | | | | | | | | | |
|---|---|---|---|---|---|---|---|---|---|
| Flag for uplink/downlink/P2P | BSS Color | BSSID | Sender partial | Sender AID | Sender MAC | Receiver partial | Receiver AID | Receiver MAC | Filling |
| transmission | | | AID | | address | AID | | address | |

In some embodiments, the meaning of each subfield in Table 5 may be as follows:
flag for uplink/downlink/P2P transmission subfield: in a case where the value is "01", it indicates the uplink transmission, that is, the PPDU transmission is transmitted from a non-AP STA to an AP; in a case where the value is "10", it indicates the downlink transmission, that is, the PPDU transmission is transmitted from an AP to a non-AP STA; in a case where the value is "11", it indicates the P2P transmission, that is, the PPDU transmission is transmitted from a non-AP STA to another non-AP STA; the value of "00" is reserved;
BSS color subfield: indicating a color of the BSS where the PPDU sender is located;
sender partial AID subfield: indicating the partial AID of the PPDU sender;
sender AID subfield: indicating the AID of the PPDU sender;
sender MAC address subfield: indicating the MAC address of the sender;
receiver partial AID subfield: indicating the partial AID of the PPDU receiver;
receiver AID subfield: indicating the AID of the PPDU receiver;
receiver MAC address subfield: indicating the MAC address of the PPDU receiver.

In some embodiments, the report message frame for reporting the first monitoring or receiving condition information is a radio measurement report frame.

In some embodiments, reporting the first monitoring or receiving condition information to the first AP device of the first BSS includes:
in a case where a radio measurement request frame is received and a measurement type corresponding to the radio measurement request frame includes a specified measurement type, reporting the first monitoring or receiving condition information to the first AP device.

In some embodiments, the specified measurement type includes: a frame measurement type.

For reporting specific type PPDU transmission information monitored or received by the station, a measurement request and measurement reporting mechanism defined in the IEEE 802.11 specification may be used. In this case, by adding content of a measurement request type to the measurement request frame (that is, adding a request type of PPDU transmission information or adding a request for PPDU transmission information to an existing specific request type), and adding a PPDU transmission information element corresponding to a newly added measurement type content to the measurement report frame, the station reporting monitored or received specific type PPDU transmission information is achieved.

The measurement initiator station transmits a radio measurement request frame, which includes a measurement request element and carries the PPDU transmission information request type. In particular, the "frame" measurement type may be selected in the measurement request element. Then, after receiving the radio measurement request frame, the measurement responder station feeds back a radio measurement report frame, where the radio measurement report frame carries a measurement report element. A station performing radio measurement may report the monitored or received specific type PPDU transmission information by carrying a PPDU transmission information element in the measurement report element. In particular, the PPDU transmission information subelement may be included in the measurement report field of the measurement report element with the "frame" measurement type, and its format may be as shown in Tables 6 and 7 below. For the subelement carried in the measurement report field of the frame report, a new PPDU transmission information subelement is defined, and its format may be as shown in Table 8, where the definitions of the PPDU transmission information control field and the PPDU transmission information field may refer to the definitions in Tables 2, 4 and 5 above.

**Table 6**

| | | | | |
|---|---|---|---|---|
| Operating Class 1 octet | Channel Number 1 octet | Actual Measurement Start Time 8 octets | Measurement Duration 2 octets | Optional Subelements Variable number of octets |

**Table 7**

| Subelement ID | Name | Scalability |
|---|---|---|
| 0 | Reserved | |
| 1 | Frame Count Report | No |
| 2 | PPDU transmission information element | |
| 3 - 162 | Reserved | |
| 163 | Wide Bandwidth Channel Switch | Yes |
| 164 - 220 | Reserved | |
| 221 | Vendor Specific | Supplier Definition |
| 222 - 255 | Reserved | |

Table 7 above is the format of the optional subelement field in Table 6.

**Table 8**

| | | | |
|---|---|---|---|
| Subelement ID | Length | PPDU transmission information control | PPDU transmission information table |

Table 8 above is another format of the PPDU transmission information element.

Step 703, the first AP device monitors or receives a data unit on a second BSS channel, to obtain second monitoring or receiving condition information.

The second monitoring or receiving condition information is used to indicate transmission information of a second target station of the second BSS, which is monitored or received by the first AP device, and the second target station is a station whose initiated transmission influences on or interferes with a frame exchange in the first BSS by the first AP device.

In other words, the second monitoring or receiving condition information is used to indicate the second target station monitored or received by the first AP device, where the transmission initiated by the second target station of the second BSS influences on or interferes with the first AP device.

The second monitoring or receiving condition information includes PPDU transmission information carried by the PPDU monitored or received by the first AP device.

The process of the first AP device monitoring or receiving the data unit on the second BSS channel to obtain the second monitoring or receiving condition information is similar to the process of the above step 701, which will not be repeated here.

Step 704, the first AP device shares information of a target resource and/or information of a target station with the second AP device of the second BSS according to the monitoring or receiving condition information. Correspondingly, the second AP device receives the information of the target resource and/or the information of the target station.

The information of the target resource and/or the information of the target station is used for the second AP device to restrict transmission of a station of the second BSS on a target channel and/or at a target time, and the target channel and/or the target time is a channel and/or a time on which media access protection needs to be performed of the first BSS.

The monitoring or receiving condition information may include the first monitoring or receiving condition information reported by the first STA device, and/or the second monitoring or receiving condition information obtained by the first AP device via monitoring or receiving the data unit.

In some embodiments, an access point (AP) within the BSS that needs to be protected (i.e., the first AP device, assumed to be AP1) shares information of predetermined time period and channel information on which wireless resource protection needs to be performed, and information about OBSS-involved stations on which channel access and transmission need to be restricted with its neighboring AP (i.e., the second AP device corresponding to the OBSS, assumed to be AP2). The information of OBSS-involved stations on which channel access and transmission need to be restricted for protecting radio resources may be OBSS transmission specific information (i.e., the above-mentioned PPDU transmission information) monitored or received by the stations related to the transmission on which resource protection needs to be performed (i.e., AP1 itself, and STA11 and/or STA12) during a specific time period.

When sharing the information of the target resource and/or the information of the target station with the second AP device, the first AP device may directly transmit the information of the target resource and/or the information of the target station to the second AP device, or indirectly transmit the information of the target resource and/or the information of the target station to the second AP device via stations of the first BSS and the second BSS.

Correspondingly, the second AP device receives the information of the target resource and/or the information of the target station directly transmitted by the first AP device; or receives the information of the target resource and/or the information of the target station indirectly forwarded by the first AP device via non-AP stations of the first BSS and the second BSS.

Step 705, the second AP device restricts transmission of a station of the second BSS on the target channel and/or at the target time according to the information of the target resource and/or the information of the target station, where the target channel and/or the target time is a channel and/or a time on which medium access protection needs to be performed of the first BSS.

In some embodiments, the information of the target resource includes information of the target channel and/or information of the target time.

In some embodiments, the target channel includes all or part of channels used by a station of the first BSS that has monitored or received the transmission information from the second BSS.

For example, in a case where the target station includes a first target station monitored or received by the first STA device, the target channel may include all or part of the channels in the first BSS channel used by the first STA device (such as a part of channels in the first BSS channel on which the PPDU corresponding to the first target station is monitored).

In some embodiments, the target channel is a working channel on a link corresponding to an r-TWT operation established in the first BSS.

The PPDU corresponding to the first target station may be a PPDU transmitted by the first target station, or may be a PPDU transmitted to the first target station.

In some embodiments, the target time is a time for a station of the first BSS that has monitored or received transmission information from the second BSS to perform channel competition and/or transmission.

In some embodiments, the information of the target time includes:
information of a time period corresponding to a restricted target wake-up time (r-TWT) service period of a station of the first BSS that has monitored or received the transmission information from the second BSS.

In some embodiments, time information of a first channel resource includes:
information of a time period that overlaps with the r-TWT service period of the station of the first BSS that has monitored or received transmission information from the second BSS.

In some embodiments, after receiving the information of the predetermined time period on which wireless resource protection needs to be performed and the information of the station involved in the OBSS on which channel access and transmission need to be restricted shared by AP1 (i.e., the above-mentioned first AP device), the AP (e.g., AP2) corresponding to the OBSS (i.e., the above-mentioned second BSS) of the first BSS may restrict the channel access and transmission of the station involved in the OBSS (i.e., AP2 and/or related stations associated with AP2) before the start time of the predetermined time period and during the predetermined time period, to ensure that the station involved in the OBSS does not interfere with the frame transmission between the stations related to the protected BSS transmission (e.g., AP1, STA11, and STA12) during the predetermined time period, or to reduce interference of the station involved in the OBSS with the frame transmission between the stations related to the protected BSS transmission during the predetermined time period.

In some embodiments, when restricting the transmissions of station of the second BSS on the target channel and/or at the target time according to the information of the target resource and/or the information of the target station, the second AP device may restrict transmission of all stations of the second BSS on the target channel and/or at the target time according to the information of the target resource and/or the information of the target station.

When restricting the transmission of stations of the second BSS on the target channel and/or at the target time, the second AP device may directly control the transmission of all stations of the second BSS on the target channel and/or at the target time to restrict without distinguishing between the stations of the second BSS.

In some embodiments, restricting the transmission of the station of the second BSS at the target time includes:
controlling all stations of the second BSS to terminate transmission opportunities before a start time corresponding to the target time; or
controlling all stations of the second BSS to be in a silent state during a time period corresponding to the target time; or
allowing all stations of the second BSS to compete for TXOPs using a first EDCA parameter set during the time period corresponding to the target time; or
controlling all stations of the second BSS to terminate the transmission opportunities before the start time corresponding to the target time, and controlling all stations of the second BSS to be in the silent state during the time period corresponding to the target time; or
controlling all stations of the second BSS to terminate the transmission opportunities before the start time corresponding to the target time, and allowing all stations of the second BSS to compete for the TXOPs using the first enhanced distributed channel access (EDCA) parameter set during the time period corresponding to the target time;
where a priority of the first EDCA parameter set is lower than a priority corresponding to a second EDCA parameter set used by a station of the first BSS that has monitored or received transmission information from the second BSS, or lower than a priority corresponding to an universal EDCA parameter set.

The universal EDCA parameter set may be a multi-user (MU) EDCA parameter set.

For example, in a case where the information of the target resource and/or the information of the target station include the information of the target time, when the second AP (e.g., the AP2) restricts the channel access and transmission of all stations of the OBSS before the start time of the predetermined time period on which wireless resource protection needs to be performed and during the predetermined time period, at least one of the following channel access rules may be adopted that:
1) all stations of the OBSS terminate their TXOPs in advance before the start time of the predetermined time period on which wireless resource protection needs to be performed;
2) all stations of the OBSS are in the silent state during the predetermined time period on which wireless resource protection needs to be performed;
3) all stations of the OBSS may compete for channels to obtain TXOPs during the predetermined time period on which wireless resource protection needs to be performed, and use the EDCA parameter set with the lower competition priority than the stations of the BSS.

The above rules 1) and 2) may be used in combination, and the above rules 1) and 3) may also be used in combination.

In some embodiments, restricting the transmission of the station of the second BSS on the target channel and at the target time includes:
controlling all stations of the second BSS to terminate transmission opportunities on the target channel before a start time corresponding to the target time; or
controlling all stations of the second BSS to be in a silent state on the target channel during a time period corresponding to the target time; or
allowing all stations of the second BSS to compete for TXOPs on the target channel using a first EDCA parameter set during the time period corresponding to the target time; or
controlling all stations of the second BSS to terminate the transmission opportunities on the target channel before the start time corresponding to the target time, and controlling all stations of the second BSS to be in the silent state on the target channel during the time period corresponding to the target time; or
controlling all stations of the second BSS to terminate the transmission opportunities on the target channel before the start time corresponding to the target time, and allowing all stations of the second BSS to compete for the TXOPs on the target channel using the first EDCA parameter set during the time period corresponding to the target time.

In the above embodiment, in a case where the information of the target resource and/or the information of the target station includes the information of the target time, the second AP (e.g., the AP2) restricts the channel access and transmission of all stations of the OBSS on the target channel before the start time of the predetermined time period and during the predetermined time period on which wireless resource protection needs to be performed. In this solution, the second AP does not need to restrict the channel access and transmission of the stations of the OBSS on the channel other than the target channel, so as to reduce the effects on the transmission between the stations of the OBSS.

In some embodiments, restricting transmission of the station of the second BSS on the target channel includes:
controlling all stations of the second BSS to be in the silent state on the target channel; or
allowing all stations of the second BSS to compete for TXOPs using the first EDCA parameter set on the target channel.

In some embodiments, in a case where the information of the target resource and/or the information of the target station further includes station information of the target station, restricting transmission of the station of the second BSS on the target channel and/or at the target time according to the information of the target resource and/or the information of the target station includes:
restricting transmission of the target station on the target channel and/or at the target time according to the information of the target resource and/or the information of the target station.

When restricting the transmission of the station of the second BSS on the target channel and/or at the target time, the second AP device may restrict the transmission of the target station of the second BSS, which exists influence or interference monitored by a station of the first BSS, that is, control the transmission of the target station of the second BSS on the target channel and/or at the target time to restrict.

In some embodiments, in a case where the information of the target resource and/or the information of the target station further includes the station information of the target station, restricting the transmission of the target station at the target time includes:
controlling the target station to terminate a transmission opportunity before a start time corresponding to the target time; or
controlling the target station to be in a silent state during a time period corresponding to the target time; or
allowing the target station to compete for a TXOP using a first EDCA parameter set during a time period corresponding to the target time; or
controlling the target station to terminate the transmission opportunity before the start time corresponding to the target time, and controlling the target station to be in the silent state during the time period corresponding to the target time; or
controlling the target station to terminate the transmission opportunity before the start time corresponding to the target time, and allowing the target station to compete for the TXOP using the first EDCA parameter set during a time period corresponding to the target time.

For example, in a case where the information of the target resource and/or the information of the target station include the information of the target time, the channel access and transmission of the station involved in the OBSS transmission link that will interfere with the transmission of the first BSS transmission before the start time of the predetermined time period and during the predetermined time period on which wireless resource protection needs to be performed are restricted. For example, the OBSS transmission link that will interfere with the transmission of the first BSS includes a link between the station STA21 and the station STA22 (both STA21 and STA22 are stations of the OBSS, which may be access points or non-access point stations), and at least one of the following channel access rules is adopted that:
1) STA21 and STA22 terminate their TXOPs in advance before the start time of the predetermined time period on which the wireless resource protection needs to be performed.
2) STA21 and STA22 are in the silent state during the predetermined time period on which the wireless resource protection needs to be performed.
3) all stations of the OBSS may compete for channels to obtain the TXOPs during the predetermined time period on which wireless resource protection needs to be performed, and use the EDCA parameter set with a lower competition priority than the stations of the BSS.
4) for the station involved in the OBSS transmission link that does not interfere with the transmission of the BSS except STA21 and STA22 of the OBSS, channel access and transmission are not restricted.

The above rules 1) and 2) may be used in combination, and the above rules 1) and 3) may also be used in combination. The above rules 1) to 3) may be used in combination with rule 4).

In some embodiments, in a case where the target resource information and/or the target station information further includes the station information of the target station, restricting the transmission of the target station on the target channel and at the target time includes:
controlling the target station to terminate a transmission opportunity on the target channel before a start time corresponding to the target time; or
controlling the target station to be in a silent state on the target channel during a time period corresponding to the target time; or
allowing the target station to compete for a TXOP on the target channel using a first EDCA parameter set during the time period corresponding to the target time; or
controlling the target station to terminate the transmission opportunity on the target channel before the start time corresponding to the target time, and controlling the target station to be in a silent state on the target channel during the time period corresponding to the target time; or
controlling the target station to terminate the transmission opportunity on the target channel before the start time corresponding to the target time, and allowing the target station to compete for the TXOP using the first EDCA parameter set during the time period corresponding to the target time on the target channel.

In the above embodiments, in a case where the information of the target resource and/or the information of the target station includes information of the target time, the second AP (e.g., the AP2) restricts the channel access and transmission of the target station of the OBSS on the target channel before the start time of the predetermined time period and during the predetermined time period on which wireless resource protection needs to be performed. In this solution, the second AP does not need to restrict the channel access and transmission of the target station of the OBSS on the channel other than the target channel, so as to reduce the influences on the transmission among stations of the OBSS.

In some embodiments, restricting the transmission of the target station of the second BSS on the target channel includes:
controlling the target station of the second BSS to be in the silent state on the target channel; or
allowing the target station of the second BSS to compete for a TXOP on the target channel using the first EDCA parameter set.

In some embodiments, restricting the transmission of the target station on the target channel and/or at the target time according to the information of the target resource and/or the information of the target station includes:
restricting, based on a transmission role of the target station, the transmission of the target station on the target channel and/or at the target time according to the information of the target resource and/or the information of the target station;
where the transmission role is used to indicate that the target station is a transmission sender or a transmission receiver of the transmission information monitored or received by the station of the first BSS from the second BSS.

In the above embodiments, the second AP may further make differentiated transmission restrictions on the target station of the second BSS according to the transmission role of the target station in the influences or interferences monitored or received by a station of the first BSS from the second BSS.

In some embodiments, in a case where the target station is the transmission sender, restricting the transmission of the target station at the target time includes:
controlling the target station to terminate a transmission opportunity before a start time corresponding to the target time; or
controlling the target station not to initiate a competition for a TXOP during a time period corresponding to the target time; or
allowing the target station to compete for the TXOP using a first EDCA parameter set during the time period corresponding to the target time; or
controlling the target station to terminate the transmission opportunity before the start time corresponding to the target time, and controlling the target station not to initiate the competition for the TXOP during the time period corresponding to the target time; or
controlling the target station to terminate the transmission opportunity before the start time corresponding to the target time, and allowing the target station to compete for the TXOP using the first EDCA parameter set during the time period corresponding to the target time.

In some embodiments, in a case where the target station is the transmission sender, restricting the transmission of the target station on the target channel and at the target time includes:
controlling the target station to terminate the transmission opportunity on the target channel before a start time corresponding to the target time; or
controlling the target station not to initiate a competition for a TXOP on the target channel during a time period corresponding to the target time; or
allowing the target station to compete for the TXOP on the target channel using a first EDCA parameter set during the time period corresponding to the target time; or
controlling the target station to terminate the transmission opportunity on the target channel before the start time corresponding to the target time, and controlling the target station not to initiate the competition for the TXOP on the target channel during the time period corresponding to the target time; or
controlling the target station to terminate the transmission opportunity on the target channel before the start time corresponding to the target time, and allowing the target station to compete for the TXOP on the target channel using the first EDCA parameter set during the time period corresponding to the target time.

In some embodiments, in a case where the target station is the transmission sender, restricting transmission of the target station of the second BSS on the target channel includes:
controlling the target station of the second BSS to be in a silent state on the target channel; or
allowing the target station of the second BSS to compete for a TXOP on the target channel using the first EDCA parameter set.

In some embodiments, in a case where the target station is the transmission receiver, restricting the transmission of the target station on the target channel and/or at the target time includes:
allowing the target station to initiate transmission on the target channel and/or at the target time and transmit a specified type frame to the second STA device; and/or
prohibiting the target station from transmitting a frame other than the specified type frame to the second STA device on the target channel and/or at the target time, where the second STA device is a station which transmits transmission information in the transmission information monitored or received by the station of the first BSS to the target station from the second BSS, a length of a response frame of the specified type frame is less than or equal to a frame length threshold.

In the above embodiments, in a case where the target station is the transmission receiver, the target station may be allowed to initiate the transmission on the target channel and/or at the target time and transmit an information frame that need a response frame with a shorter feedback to the second STA device; and/or, the target station is prohibited transmitting an information frame that need a response frame with a longer feedback to the second STA device, while the target station is allowed to transmit the information frame that need the response frame with shorter feedback (e.g., an acknowledgement frame) to the second STA device, thereby controlling the length of the frame transmitted by the second STA device to the target station, and a purpose of controlling the influences or interferences on the station of the first BSS when the second STA device sends the PPDU to the target device.

In the above embodiments, for the OBSS transmission link that will interfere with the BSS transmission, before the start time of the predetermined time period and during the predetermined time period on which wireless resource protection needs to be performed, the channel access and transmission of the station involved in the OBSS transmission link may be restricted in a differentiated manner according to whether the station involved in the OBSS transmission link is the sender or the receiver. For example, in a case where the sender station and the receiver station in the OBSS transmission link that will interfere with the BSS transmission are STA21 and STA22 (both STA21 and STA22 are stations of the OBSS, which may be access points or non-access point stations), at least one of the following channel access rules is adopted for the sender station STA21:
1) STA21 terminates its TXOP in advance before the start time of the predetermined time period on which wireless resource protection needs to be performed;
2) STA21 does not compete for the channel for initiating transmission during the predetermined time period on which wireless resource protection needs to be performed;
3) STA21 may compete for the channel to obtain a TXOP during the predetermined time period on which wireless resource protection needs to be performed, and adopt the EDCA parameter set with the lower competition priority.

For STA22, since its transmission of PPDU to STA21 will not cause interference with the BSS transmission link, STA22 may be allowed to compete for the channel to obtain the TXOP to initiate the transmission during the predetermined time period on which wireless resource protection needs to be performed. But during the TXOP when STA22 initiates the transmission, a length of the PPDU transmitted by STA21 to STA22 is controlled within a certain threshold range, for example, only transmitting the acknowledgement frame.

In some embodiments, in a case of restricting the transmission of station of the second BSS on the target channel and/or at the target time according to the information of the target resource and/or the information of the target station, the second AP may transmit a channel resource protection enable notification frame to a third STA device of the second BSS according to the information of the target resource and/or the information of the target station, where the channel resource protection enable notification frame is used to indicate that the third STA device restricts transmission on the target channel and/or at the target time.

In some embodiments, the channel resource protection enable notification frame includes a protected period element;
where the protected period element includes a protected period control field, a protected period count field, a protected period field, a protected period duration field, and a protected period offset field; where
the protected period control field is used to indicate a mode for restricting the transmission corresponding to time information;
the protected period count field is used to indicate the number of TBTTs to reach a beacon interval where a start time of a next time period is located;
the protected period field is used to indicate the number of beacon intervals between the start times of the time periods;
the protected period duration field is used to indicate a duration of the time period; and
the protected period offset field is used to indicate an offset value between a start time of the time period and a TBTT defined by the protected period count field.

In some embodiments, the protected period control field includes a resource protection mode indication bitmap; where
each bit position in the resource protection mode indication bitmap corresponds to a resource protection mode, and a bit value of each bit position in the resource protection mode indication bitmap is used to indicate whether the corresponding resource protection mode is enabled.

In some embodiments, a channel resource protection operation notification frame is transmitted to the third STA device, where the channel resource protection operation notification frame is used to indicate that the third STA device terminates or restarts the restriction on the transmission on the target channel and/or at the target time.

In some embodiments, the channel resource protection operation notification frame includes an indication mark; where
the indication mark is used to indicate terminating or restarting the restriction on transmission on the target channel and/or at the target time.

In the above embodiment, the protected period element may be used to indicate the protected period information and the channel resource protection mode or measure adopted during the protected period, and its format may be defined as shown in Table 9 below.

**Table 9**

| | | | | | | | |
|---|---|---|---|---|---|---|---|
| Element ID (1 octet) | Length (1 octet) | Element ID Extension (1 octet) | Protected period control (1 octet) | Protected period count (1 octet) | Protected period (1 octet) | Protected period duration (2 octets) | Protected period offset (2 octets) |

The format of the protected period control field in Table 9 above may be shown in Table 10 below.

**Table 10**

| | |
|---|---|
| Resource protection mode indication bitmap (6 bits) | Reserved (2 bits) |

Taking the information of the target resource and/or the information of the target station including the target time as an example, the definition of the resource protection mode indication bitmap subfield in the above Table 10 may be shown in Table 11.

**Table 11**

| Bit position of the resource protection mode indication bitmap field | The meaning of the corresponding bit position being set to 1 |
|---|---|
| No. 1 | Terminate its TXOP in advance before the start point of the protected period |
| No. 2 | Does not initiate transmission during the protected period |
| No. 3 | Compete for the TXOP during protected period and use EDCA parameter with the lower priority |
| No. 4 | remain the silent state during the protected period |
| No. 5 | Allow competing for the channel in the protected period to obtain the TXOP to initiate uplink or downlink transmission. During the TXOP when initiating the transmission, it is ensured that the length of PPDU transmitted by the responder is controlled within a certain threshold range. |
| No. 6 | Allow competing for the channel in the protected period to obtain the TXOP to initiate the P2P transmission. During the TXOP when initiating the transmission, it is ensured that the length of PPDU transmitted by the responder is controlled within a certain threshold range. |

The other fields in Table 9 above may be defined as follows.

The protected period count field is set to the number of target beacon transmission intervals (TBTT) to reach a beacon interval where a start time of the next protected period located; a value of 0 indicates reserved.

The protected period field is set to the number of beacon intervals between the start times of the protected periods which are scheduled defined by the element; a value of 0 indicates that no protected period is defined.

The protected period duration field is set to the duration of the protected period, its unit is expressed in time units (TU).

The protected period offset field is set to an offset value between the start time of the protected period and a TBTT defined by the protected period count field.

In the above embodiments, the channel resource protection notification frame is used for the initiator to indicate information of starting the protected period and/or adopted channel resource protection mode or measure to the responder. A format of an action field of the frame is shown in Table 12.

**Table 12**

| Order | Information |
|---|---|
| 1 | Category |
| 2 | Protected Action |
| 3 | Dialog Token |
| 4 | Protected Action Identifier |
| 5 | Protected Period Element |

The category field in Table 12 is defined as specified in the IEEE 802.11 specification.

The protected action field in Table 12 is defined as specified in the IEEE 802.11 specification.

The dialog token field in the Table 12 is set to a non-zero value by the initiator and is set to a copy of the corresponding value of the received channel resource protection notification frame by the responder. If a value of dialog token in an action initiated by the sender is the same as the value in the action frame transmitted by the responder, it is indicate that they belong to the same action event.

The protected action identifier field in the Table 12 is used to uniquely identify the channel resource protection action event indicated by the frame.

The protected period element field is as defined in Tables 9 to 11 above.

In the above embodiment, the channel resource protection operation notification frame is used to terminate or restart the previously initiated channel resource protection action event. The action field format of the frame may be shown in Table 13.

**Table 13**

| Order | Information |
|---|---|
| 1 | Category |
| 2 | Protected Action |
| 3 | Dialog Token |
| 4 | Protected Action Identifier |
| 5 | Whether to terminate the indication mark |

The category field in the Table 13 is defined as specified in the IEEE 802.11 specification.

The protected action field in Table 13 is defined as specified in the IEEE 802.11 specification.

The dialog token field in the Table 13 is set to a non-zero value by the initiator and is set to the copy of the corresponding value of the received channel resource protection notification frame by the responder.

The protected action identifier field in the Table 13 is used to indicate the channel resource protection action event corresponding to the operation.

The whether to terminate indication mark field in the Table 13 is used to indicate terminating or restarting the channel resource protection action event indicated by the protected action identifier field.

The channel resource protection enable notification frame is generally transmitted by an AP and may be a broadcast/multicast frame, or a unicast frame. In a case where the channel resource protection enable notification frame is the broadcast frame, it is notified that the non-AP STA associated with the AP enables the related channel resource protection; in a case where the channel resource protection notification frame is the multicast frame, it is notified that the non-AP STA associated with the AP and belonging to the indicated multicast group (identified by a destination multicast receiving address) enables the related channel resource protection; in a case where the channel resource protection notification frame is the unicast frame, it is notified that the specific non-AP STA associated with the AP (identified by the destination receiving address) enables the related channel resource protection.

The channel resource protection operation notification frame is generally transmitted by an AP and may be a broadcast/multicast frame, or a unicast frame. In a case where the channel resource protection operation notification frame is the broadcast frame, it is notified that the non-AP STA associated with the AP performs the related channel resource protection operation; in a case where the channel resource protection operation notification frame is the multicast frame, it is notified that the non-AP STA associated with the AP and belonging to the indicated multicast group (identified by a destination multicast receiving address) performs the related channel resource protection operation; in a case where the channel resource protection operation notification frame is the unicast frame, it is notified that the specific non-AP STA associated with the AP (identified by the destination receiving address) performs the related channel resource protection operation.

Correspondingly, on the third STA device side, the third STA device receives the channel resource protection enable notification frame transmitted by the second AP device of the second BSS. The channel resource protection enable notification frame is transmitted by the second AP device after receiving the information of the target resource and/or the information of the target station transmitted by the first AP device of the first BSS. The information of the target resource and/or the information of the target station is shared by the first AP device according to the monitoring or receiving condition information; the monitoring or receiving condition information is used to indicate the transmission information of the target station of the second BSS, which is monitored or received by the station of the first BSS. The target station is a station whose initiated transmission influences on or interferes with the frame exchange in the first BSS by the station of the first BSS; according to the channel resource protection enable notification frame, the third STA device restricts transmission of the third STA device on the target channel and/or at the target time. The target channel and/or the target time is the channel and/or the time on which media access protection needs to be performed of in the first BSS.

In some embodiments, restricting, the third STA device, the transmission of the third STA device at the target time includes:
terminating a TXOP before a start time corresponding to the target time; or
controlling all stations of the second BSS to be in a silent state during a time period corresponding to the target time; or
not initiating a competition for a TXOP during the time period corresponding to the target time; or
competing for the TXOP during the time period corresponding to the target time using a first EDCA parameter set; or
terminating the TXOP before the start time corresponding to the target time, and being in the silent state during the time period corresponding to the target time; or
terminating the TXOP before the start time corresponding to the target time, and not initiating the competition for the TXOP during the time period corresponding to the target time; or
terminating the TXOP before the start time corresponding to the target time, and allowing competing for the TXOP using the first EDCA parameter set during the time period corresponding to the target time; or
allowing initiating transmission on the target channel and/or at the target time and transmitting a specified type frame to a second STA device, and/or prohibiting transmitting a frame other than the specified type frame to the second STA device.

In some embodiments, restricting, by the third STA device, the transmission of the third STA device on the target channel and at the target time includes:
terminating a TXOP on the target channel before the start time corresponding to the target time; or
controlling all stations of the second BSS to be in a silent state on the target channel during a time period corresponding to the target time; or
not initiating a competition for a TXOP on the target channel during the time period corresponding to the target time; or
competing for the TXOP on the target channel during the time period corresponding to the target time using a first EDCA parameter set; or
terminating the TXOP on the target channel before the start time corresponding to the target time, and being in the silent state on the target channel during the time period corresponding to the target time; or
terminating the TXOP on the target channel before the start time corresponding to the target time, and not initiating the competition for the TXOP on the target channel during the time period corresponding to the target time; or
terminating TXOP on the target channel before the start time corresponding to the target time, and allowing competing for the TXOP on the target channel during the time period corresponding to the target time using the first EDCA parameter set ; or
allowing initiating transmission on the target channel and/or at the target time and transmitting a specified type frame to the second STA device, and/or prohibiting transmitting a frame other than the specified type frame to the second STA device on the target channel and/or at the target time.

The following uses different scenarios as examples to introduce the solutions involved in the present application.

### Scenario 1

Referring to FIG. 8, a schematic diagram of a transmission scenario involved in the embodiments of the present application is illustrated. As shown in FIG. 8, there are two BSSs in the Wi-Fi system, one is a BSS in which AP1 and its associated station STA1 are operated, and the other is an OBSS in which AP2 and its associated station STA2 are operated, and corresponding to the BSS. To address the problem of the OBSS interference, the resource protection for transmission between specific stations of the BSS during the predetermined time period (i.e., the protected period) is performed through the above-mentioned solutions of the present application.

Specifically, the BSS transmission-related station that needs to perform wireless resource protection during the predetermined time period (such as AP1 and STA1 in FIG. 8) obtains OBSS transmission specific information (i.e., PPDU transmission information corresponding to the PPDU transmitted by the station of the OBSS) by monitoring or receiving the OBSS PPDU, where through the reporting scheme of monitoring or receiving specific type PPDU transmission information, STA1 feeds back the obtained information to AP1 via a radio measurement report frame. AP1 shares information of the predetermined time period on which wireless resource protection needs to be performed (e.g., r-TWT SP information corresponding to STA1), and station information of the station involved in the OBSS on which channel access and transmission need to be restricted for performing wireless resource protection (e.g., the station information involved in the OBSS transmission fed back by STA1 and/or AP1) with AP2. After receiving the above information, AP2 restricts the channel access and transmission of the station involved in the OBSS (i.e., the related station associated with AP2, such as STA2) during the predetermined time period by transmitting a channel resource protection enable notification frame and/or a channel resource protection operation notification frame. The details are as follows.

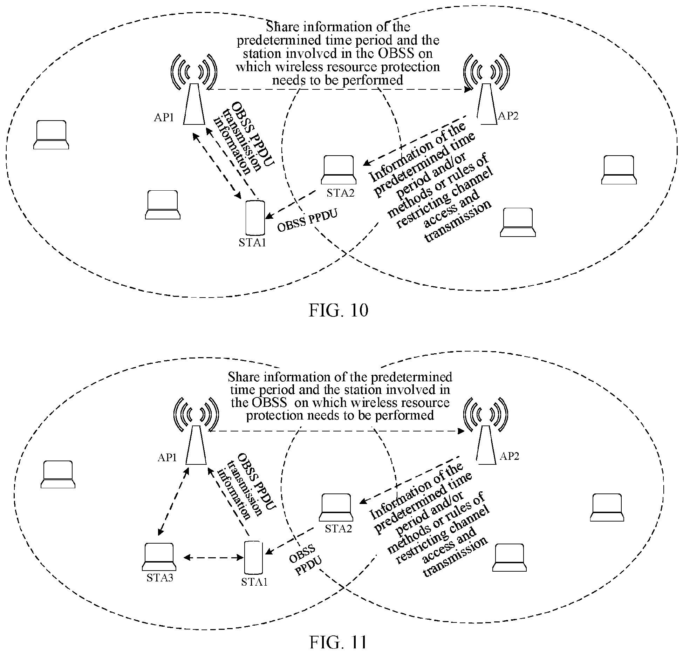

As shown in FIG. 10, the sender information of the OBSS PPDU received by STA1 includes identifier information of AP2 (such as partial AID of AP2, an AID of AP2, or a MAC address of AP2) and/or the receiver information of the OBSS PPDU received by STA1 includes identifier information of the station (which is set to STA2) associated with AP2 (such as partial AID of STA2, an AID of STA2, or a MAC address of STA2), and the sender information of the OBSS PPDU does not include the identifier information of STA2 (associated with AP2), then AP2 adopts at least one of the following channel access rules:
1) AP2 terminates its TXOP in advance before the start time of the protected period (e.g., the r-TWT service period);
2) AP2 does not compete for the channel to initiate transmission during the protected period; or
3) AP2 may compete for the channel to obtain the TXOP during the protected period, and adopt the EDCA parameter set with a lower competition priority.

Furthermore, STA2 adopts at least one of the following channel access rules:
1) STA2 is allowed to compete for the channel during the protected period to obtain the TXOP for initiating uplink transmission, and during the TXOP when it initiates transmission, it is ensured that the length of the PPDU transmitted by the responder is controlled within a certain threshold range.

### Scenario 2

Referring to FIG. 9, a schematic diagram of a transmission scenario involved in the embodiments of the present application is illustrated. As shown in FIG. 9, there are two BSSs in the Wi-Fi system, one is a BSS in which AP1 and its associated station STA1 are operated, and the other is an OBSS in which AP2 and its associated station STA2 are operated. To address the problem of the OBSS interference, the resource protection for transmission between specific stations of a specific BSS during the predetermined time period (i.e., the protected period) is performed through the above-mentioned solutions of the present application.

Specifically, the BSS transmission-related station that needs to perform wireless resource protection during the predetermined time period (such as AP1 and STA1 in FIG. 9) obtains OBSS transmission specific information by monitoring or receiving the OBSS PPDU, where through the reporting scheme of monitoring or receiving specific type PPDU transmission information, STA1 feeds back the obtained information to AP1 via a radio measurement report frame. AP1 shares information of the predetermined time period on which wireless resource protection needs to be performed (e.g., r-TWT SP information corresponding to STA1), and station information of the station involved in the OBSS on which channel access and transmission need to be restricted for performing wireless resource protection (e.g., the station information involved in the OBSS transmission fed back by STA1 and/or AP1) with AP2. After receiving the above information, AP2 restricts the channel access and transmission of the station involved in the OBSS (i.e., the related station associated with AP2, such as STA2) during the predetermined time period by transmitting a channel resource protection enable notification frame and/or a channel resource protection operation notification frame. The details are as follows.

The sender information of the OBSS PPDU received by STA1 includes identifier information of AP2 and/or the receiver information of the OBSS PPDU received by STA1 includes identifier information of the station (which is set to STA2) associated with AP2, and the sender information of the OBSS PPDU received by STA1 further includes the identifier information of STA2 (associated with AP2), then AP2 adopts at least one of the following channel access rules:
1) AP2 terminates its TXOP in advance before the start time of the protected period (e.g., the r-TWT service period);
2) AP2 does not compete for the channel to initiate transmission during the protected period; or
3) AP2 may compete for the channel to obtain the TXOP during the protected period, and adopt the EDCA parameter set with a lower competition priority.

Furthermore, STA2 adopts at least one of the following channel access rules:
1) STA2 terminates its TXOP in advance before the start time of the protected period (e.g., the r-TWT service period);
2) STA2 does not compete for the channel to initiate transmission during the protected period; or
3) STA2 may compete for the TXOP during the protected period, and adopt the EDCA parameter set with a lower competition priority.

### Scenario 3 and Scenario 4

Referring to FIGS. 10 and 11, schematic diagrams of two transmission scenarios involved in the embodiments of the present application are illustrated. As shown in FIGS. 10 and 11, there are two BSSs in the Wi-Fi system, one is a BSS in which AP1 and its associated stations STA1 and STA3 are operated, and the other is an OBSS in which AP2 and its associated station STA2 are operated. To address the problem of the OBSS interference, the resource protection for transmission between specific stations of a specific BSS (i.e., the BSS on which AP1 and its associated station STA1 or STA3 are operated) during the predetermined time period (i.e., the protected period) is performed through the solution involved in the present application.

Specifically, the BSS transmission-related station that needs to perform wireless resource protection during the predetermined time period (such as AP1 and STA1 in FIG. 10) obtains OBSS transmission specific information by monitoring or receiving the OBSS PPDU, where through the reporting scheme of monitoring or receiving specific type PPDU transmission information, STA1 feeds back the obtained information to AP1 via a radio measurement report frame. AP1 shares information of the predetermined time period on which wireless resource protection needs to be performed (e.g., r-TWT SP information corresponding to STA1), and station information of the station involved in the OBSS on which channel access and transmission need to be restricted for performing wireless resource protection (e.g., the station information involved in the OBSS transmission fed back by STA1 and/or AP1) with AP2. After receiving the above information, AP2 restricts the channel access and transmission of the station involved in the OBSS (i.e., the related station associated with AP2, such as STA2) during the predetermined time period by transmitting a channel resource protection enable notification frame and/or a channel resource protection operation notification frame. The details are as follows.

In scenarios 3 and 4, the sender identifier information of the OBSS PPDU received by STA1 does not include identifier information of AP2, but includes identifier information of the station (which is set to station STA2) associated with AP2, then STA2 adopts at least one of the following channel access rules:
1) STA2 terminates its TXOP in advance before the start time of the protected period (e.g., the r-TWT service period);
2) STA2 does not compete for the channel to initiate transmission during the protected period; or
3) STA2 may compete for the TXOP during the protected period, and adopt the EDCA parameter set with a lower competition priority.

Furthermore, AP2 adopts at least one of the following channel access rules:
1) AP2 initiates transmission with STA2 on the TXOP obtained before the start time of the protected period, and terminates its TXOP in advance before the start time of the protected period;
2) AP2 competes for the channel to obtain the TXOP during the protected period, and initiates transmission with other associated stations (which is set to STA3) except STA2 on TXOP, where the sender identifier information of the OBSS PPDU received by STA1 does not include the identifier information of STA3; or
3) AP2 competes for the channel to obtain the TXOP during the protected period, and after obtaining the TXOP, if a trigger frame is transmitted to trigger uplink transmission of STA2, it is ensured that a length of the uplink transmission of STA2 less than or equal to a threshold. Where if the trigger frame transmitted by AP2 is an MU-BAR trigger frame or a GCR MU-BAR trigger frame, the UL length subfield in an universal information field of the trigger frame corresponding to trigger the uplink transmission of STA2 is less than or equal to 418, or the UL length subfield in the universal information field of the trigger frame corresponding to trigger the uplink transmission of STA2 is less than or equal to 76.

### Scenario 5

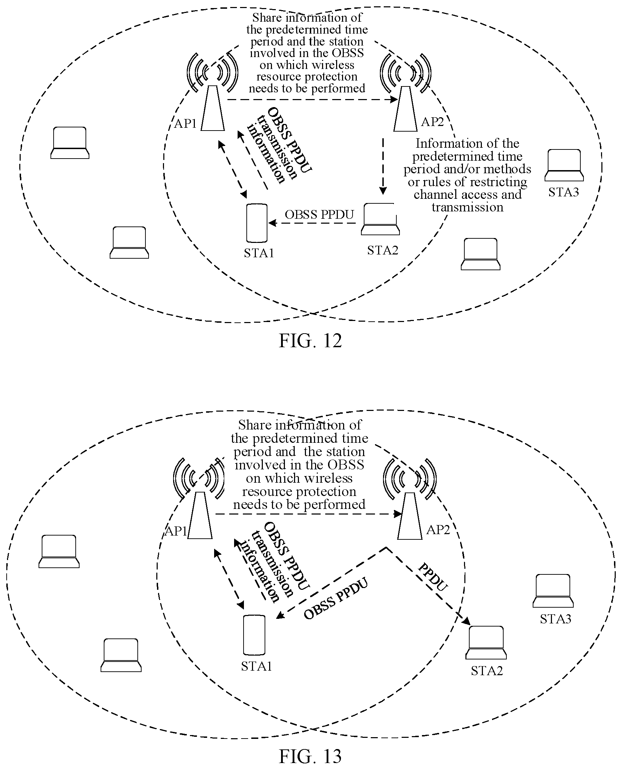

Referring to FIG. 12, a schematic diagram of a transmission scenario involved in an embodiment of the present application is illustrated. As shown in FIG. 12, there are two BSSs in the Wi-Fi system, one is a BSS in which AP1 and its associated station STA1 are operated, and the other is an OBSS in which AP2 and its associated station STA2 are operated. To address the problem of the OBSS interference, the resource protection for transmission between specific stations of a specific BSS (i.e., the BSS on which AP1 and its associated station STA1 are operated) during the predetermined time period (i.e., the protected period) is performed through the solutions involved in the present application.

Specifically, the BSS transmission-related station that needs to perform wireless resource protection during the predetermined time period (such as AP1 and STA1 in FIG. 12) obtains OBSS transmission specific information by monitoring or receiving the OBSS PPDU, where through the reporting scheme of monitoring or receiving specific type PPDU transmission information, STA1 feeds back the obtained information to AP1 via a radio measurement report frame. AP1 shares information of the predetermined time period on which wireless resource protection needs to be performed (e.g., r-TWT SP information corresponding to STA1), and station information of the station involved in the OBSS on which channel access and transmission need to be restricted for performing wireless resource protection (e.g., the station information involved in the OBSS transmission fed back by STA1 and/or AP1) with AP2. After receiving the above information, AP2 restricts the channel access and transmission of the station involved in the OBSS (i.e., the related station associated with AP2, such as STA2) during the predetermined time period by transmitting a channel resource protection enable notification frame and/or a channel resource protection operation notification frame. The details are as follows.

Sender identifier information of the OBSS PPDU received by STA1 includes identifier information of STA2 and/or identifier information of AP2, and sender identifier information of the OBSS PPDU received by AP1 includes the identifier information of AP2 and/or the identifier information of STA2, then AP2 adopts at least one of the following channel access rules:
1) AP2 terminates its TXOP in advance before the start time of the protected period (e.g., the r-TWT service period);
2) AP2 does not compete for the channel to initiate transmission during the protected period; or
3) AP2 may compete for the channel to obtain the TXOP during the protected period, and adopt the EDCA parameter set with a lower competition priority.

STA2 adopts at least one of the following channel access rules:
1) STA2 terminates its TXOP in advance before the start time of the protected period;
2) STA2 does not compete for the channel to initiate transmission during the protected period; or
3) STA2 may compete for channel to obtain the TXOP during the protected period, and adopt the EDCA parameter set with a lower competition priority.

### Scenario 6 and Scenario 7

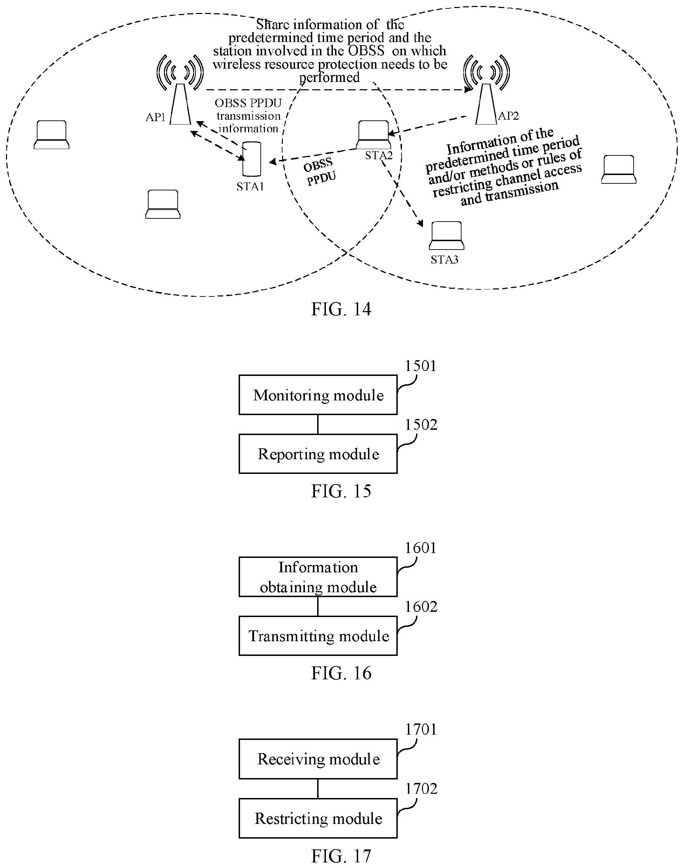

Referring to FIGS. 13 and 14, schematic diagrams of two transmission scenarios involved in the embodiments of the present application are illustrated. As shown in FIGS. 13 and 14, there are two BSSs in the Wi-Fi system, one is a BSS in which AP1 and its associated station STA1 are operated, and the other is an OBSS in which AP2 and its associated station STA2 are operated. To address the problem of the OBSS interference, the resource protection for transmission between specific stations of a specific BSS (i.e., the BSS in which AP1 and its associated station STA1 are operated) during the predetermined time period (i.e., the protected period) is performed through the solution involved in the present application.

Specifically, the BSS transmission-related station that needs to perform wireless resource protection during the predetermined time period (such as AP1 and STA1 in FIGS. 13 and 14) obtains OBSS transmission specific information by monitoring or receiving the OBSS PPDU, where through the reporting scheme of monitoring or receiving specific type PPDU transmission information, STA1 feeds back the obtained information to AP1 via a radio measurement report frame. AP1 shares the information of predetermined time period on which wireless resource protection needs to be performed (e.g., r-TWT SP information corresponding to STA1), and station information of the station involved in the OBSS on which channel access and transmission need to be restricted for performing wireless resource protection (e.g., the station information involved in the OBSS transmission fed back by STA1 and/or AP1) with AP2. After receiving the above information, AP2 restricts the channel access and transmission of the station involved in the OBSS (i.e., the related station associated with AP2, such as STA2) during the predetermined time period by transmitting a channel resource protection enable notification frame and/or a channel resource protection operation notification frame. The details are as follows.

Sender identifier information of the OBSS PPDU received by STA1 includes identifier information of AP2 and/or identifier information of STA2, and sender identifier of the OBSS PPDU received by AP1 includes the identifier information of AP2 and/or the identifier information of STA2, then AP2 adopts at least one of the following channel access rules:
1) AP2 terminates its TXOP in advance before the start time of the protected period (e.g., the r-TWT service period);
2) AP2 does not compete for the channel to initiate transmission during the protected period; or
3) AP2 may compete for channel to obtain the TXOP during the protected period, and adopt the EDCA parameter set with a lower competition priority.

Since STA2 transmitting the PPDU to AP2 will not cause interference with the link transmission between AP1 and STA1, STA2 may be allowed to compete for the channel during the protected period to obtain the TXOP to initiate transmission, and the length of the PPDU transmitted by AP2 to STA2 is limited to a certain threshold range, such as only used to transmit an acknowledgement frame.

To sum up, in the scheme shown in the embodiments of the present application, in a case where the station of the first BSS monitors that the transmission initiated by the target station of the second BSS influences or interferes with the frame exchange by the station of the first BSS, the first AP device of the first BSS may share the information of the target resource and/or the information of the target station with the second AP device according to the corresponding monitoring or receiving condition information. After receiving the information of the target resource and/or the information of the target station, the second AP device may indicate the third STA device of the second BSS to restrict the transmission on the target channel and/or at the target time by the channel resource protection enable notification frame, so as to reduce the influences or interferences of the station of the second BSS on the station of the first BSS, thereby reducing the transmission delay of the station of the first BSS.

Referring to FIG. 15, a block diagram of an apparatus for transmission provided in an embodiment of the present application. The apparatus has functions for implementing steps in the above-mentioned method for transmission which are performed by the first STA device of the first BSS, and the first STA device is a non-access point (AP) STA. As shown in FIG. 15, the apparatus may include:
a monitoring module 1501, configured to monitor or receive a data unit on the first BSS channel, to obtain first monitoring or receiving condition information, where the first monitoring or receiving condition information is used to indicate transmission information of a first target station of a second BSS, which is monitored or received by the first STA device, and the first target station is a station whose initiated transmission influences on or interferes with a frame exchange in the first BSS by the first STA device; and
a reporting module 1502, configured to report the first monitoring or receiving condition information to the first AP device of the first BSS.

In some embodiments, the first monitoring or receiving condition information is used for the first access point (AP) device of the first BSS to share information of a target resource and/or information of a target station with a second AP device of the second BSS, the information of the target resource and/or the information of the target station is used for the second AP device to restrict transmission of a station of the second BSS on a target channel and/or at a target time, and the target channel and/or the target time is a channel and/or a time on which media access protection needs to be performed of the first BSS.

In some embodiments, the second BSS is an overlapping basic service set (OBSS) of the first BSS or a BSS operating on the same channel with the first BSS.

In some embodiments, the first monitoring or receiving condition information includes station information of the first target station.

In some embodiments, the data unit includes a physical layer protocol data unit (PPDU).

In some embodiments, the apparatus further includes: a determining module, configured to determine that station information carried by the first PPDU includes information of the first target station in a case where BSS identifier information included in a monitored or received first PPDU is different from BSS identifier information of the first BSS.

In some embodiments, the BSS identifier information includes at least one of: a BSS ID, or a BSS color.

In some embodiments, a report message frame for reporting the first monitoring or receiving condition information includes PPDU transmission information carried by a PPDU monitored or received by the first STA device, and the PPDU transmission information includes at least one of the following transmission sub-information:
a transmission type, a BSS color, a BSSID, a sender association identifier (AID), sender partial AID, a sender MAC address, a receiver association identifier (AID), receiver partial AID, or a receiver MAC address;
where the transmission type includes uplink transmission, downlink transmission or point-to-point (P2P) transmission.

In some embodiments, the report message frame includes a PPDU transmission information element, and the PPDU transmission information element includes: a PPDU transmission information control field, and a PPDU transmission information field; where
the PPDU transmission control information field is used to indicate an information format of the PPDU transmission information field; and
the PPDU transmission information field is used to carry the PPDU transmission information.

In some embodiments, the PPDU transmission control information field includes at least one of the following information:
PPDU type indication information, used to indicate whether the monitored or received PPDU comes from a BSS other than the first BSS;
the amount of PPDU transmission information; or
a bitmap of the PPDU transmission information, used to indicate an information type of transmission sub-information included in the PPDU transmission information.

In some embodiments, each bit position in the bitmap of the PPDU transmission information corresponds to a type of transmission sub-information, and a bit value of each bit position in the bitmap of the PPDU transmission information is used to indicate whether corresponding transmission sub-information exists in the PPDU transmission information field.

In some embodiments, a report message frame for reporting the first monitoring or receiving condition information is a radio measurement report frame.

In some embodiments, the reporting module 1502 is configured to report the first monitoring or receiving condition information to the first AP device in a case where a radio measurement request frame is received and a measurement type corresponding to the radio measurement request frame includes a specified measurement type.

In some embodiments, the specified measurement type includes: a frame measurement type.

Referring to FIG. 16, a block diagram of an apparatus for transmission provided in an embodiment of the present application is illustrated. The apparatus has functions for implementing the steps in the above-mentioned method for transmission, which are performed by the first AP device of the first BSS. As shown in FIG. 16, the apparatus may include:
an information obtaining module 1601, configured to obtain monitoring or receiving condition information, where the monitoring or receiving condition information is used to indicate transmission information of a target station of a second BSS, which is monitored or received by a station of the first BSS on the first BSS channel, and the target station is a station whose initiated transmission influences on or interferes with a frame exchange in the first BSS by the station of the first BSS; and
a transmitting module 1602, configured to share information of a target resource and/or information of a target station with a second AP device of the second BSS according to the monitoring or receiving condition information, where the information of the target resource and/or the information of the target station is used for the second AP device to restrict transmission of a station of the second BSS on a target channel and/or at a target time, and the target channel and/or the target time is a channel and/or a time on which media access protection needs to be performed of the first BSS.

In some embodiments, the second BSS is an overlapping basic service set (OBSS) of the first BSS or a BSS operating on the same channel with the first BSS.

In some embodiments, the monitoring or receiving condition information includes station information of the target station.

In some embodiments, the information obtaining module 1601 is configured to:
receive the first monitoring or receiving condition information reported by a first STA device of the first BSS, where the first STA device is a non-AP STA, the first monitoring or receiving condition information is used to indicate transmission information of a first target station of the second BSS, which is monitored or received by the first STA device, and the first target station is a station whose initiated transmission influences on or interferes with a frame exchange in the first BSS by the first STA device; and/or
monitor or receive a data unit to obtain second monitoring or receiving condition information, where the second monitoring or receiving condition information is used to indicate transmission information of a second target station of the second BSS, which is monitored or received by the first AP device, and the second target station is a station whose initiated transmission influences on or interferes with a frame exchange in the first BSS by the first AP device.

In some embodiments, the data unit includes a physical layer protocol data unit (PPDU).

In some embodiments, the second monitoring or receiving condition information includes PPDU transmission information carried by a PPDU monitored or received by the first AP device, and the PPDU transmission information includes at least one of the following transmission sub-information:
a transmission type, a BSS colour, a BSS identifier (BSSID), a sender association identifier (AID), sender partial AID, a sender media access control (MAC) address, a receiver association identifier (AID), receiver partial AID, or a receiver MAC address; where the transmission type includes uplink transmission, downlink transmission or point-to-point P2P transmission.

In some embodiments, a report message frame for reporting the first monitoring or receiving condition information includes PPDU transmission information carried by a PPDU monitored or received by the first STA device, and the PPDU transmission information includes at least one of the following transmission sub-information:
a transmission type, a BSS colour, a BSS identifier (BSSID), a sender association identifier (AID), sender partial AID, a sender media access control (MAC) address, a receiver association identifier (AID), receiver partial AID, or a receiver MAC address; where the transmission type includes uplink transmission, downlink transmission or point-to-point P2P transmission.

In some embodiments, the report message frame includes a PPDU transmission information element, the PPDU transmission information element includes: a PPDU transmission information control field, and a PPDU transmission information field; where
the PPDU transmission control information field is used to indicate an information format of the PPDU transmission information field; and
the PPDU transmission information field is used to carry PPDU transmission information.

In some embodiments, the PPDU transmission information control field includes at least one of the following information:
PPDU type indication information, used to indicate whether the monitored or received PPDU comes from a BSS other than the first BSS;
the amount of PPDU transmission information; or
a bitmap of PPDU transmission information, used to indicate an information type of transmission sub-information included in the PPDU transmission information.

In some embodiments, each bit position in the bitmap of the PPDU transmission information corresponds to a type of transmission sub-information, and a bit value of each bit position in the bitmap of the PPDU transmission information is used to indicate whether corresponding transmission sub-information exists in the PPDU transmission information field.

In some embodiments, receiving the first monitoring or receiving condition information reported by the first STA device of the first BSS includes:
receiving the first monitoring or receiving condition information reported by the first STA device via a radio measurement report frame.

In some embodiments, the transmitting module is further configured to transmit a radio measurement request frame to the first STA device, where a measurement type corresponding to the radio measurement request frame includes a specified measurement type.

In some embodiments, the specified measurement type includes: a frame measurement type.

In some embodiments, the information of the target resource includes information of the target channel.

In some embodiments, the target channel includes all or part of channels used by a station of the first BSS that has monitored or received the transmission information from the second BSS.

In some embodiments, the target channel is a working channel on a link corresponding to an r-TWT operation established in the first BSS.

In some embodiments, the target time is a time for a station of the first BSS that has monitored or received transmission information from the second BSS to perform channel competition and/or transmission.

In some embodiments, information of the target time includes: information of a time period corresponding to a restricted target wake-up time (r-TWT) service period of a station of the first BSS that has monitored or received transmission information from the second BSS.

In some embodiments, time information of the first channel resource includes: information of a time period that overlaps with the r-TWT service period of the station of the first BSS that has monitored or received transmission information from the second BSS.

Referring to FIG. 17, a block diagram of an apparatus for transmission provided in an embodiment of the present application is illustrated. The apparatus has functions for implementing the steps in the above-mentioned method for transmission, which are performed by the second AP device of the second BSS. As shown in FIG. 17, the apparatus may include:
a receiving module, configured to receive information of a target resource and/or information of a target station shared by a first AP device of a first BSS, where the information of the target resource and/or the information of the target station is shared by the first AP device according to monitoring or receiving condition information, the monitoring or receiving condition information is used to indicate transmission information of a target station of a second BSS monitored or received by a station of the first BSS, and the target station is a station whose initiated transmission influences on or interferes with a frame exchange in the first BSS by a station of the first BSS; and
a restricting module, configured to restrict transmission of a station of the second BSS on a target channel and/or at a target time according to the information of the target resource and/or the information of the target station, where the target channel and/or the target time is a channel and/or a time on which medium access protection needs to be performed of the first BSS.

In some embodiments, the restricting module 1702 is configured to restrict transmission of all stations of the second BSS on the target channel and/or at the target time according to the information of the target resource and/or the information of the target station.

In some embodiments, the restricting module 1702 is configured to:
control all stations of the second BSS to terminate transmission opportunities before a start time corresponding to the target time; or
control all stations of the second BSS to be in a silent state during a time period corresponding to the target time; or
allow all stations of the second BSS to compete for TXOPs using a first EDCA parameter set during the time period corresponding to the target time; or
control all stations of the second BSS to terminate the transmission opportunities before the start time corresponding to the target time, and controlling all stations of the second BSS to be in the silent state during the time period corresponding to the target time; or
control all stations of the second BSS to terminate the transmission opportunities before the start time corresponding to the target time, and allowing all stations of the second BSS to compete for the TXOPs using the first EDCA parameter set during the time period corresponding to the target time;
where a priority of the first EDCA parameter set is lower than a priority corresponding to a second EDCA parameter set used by a station of the first BSS that has monitored or received transmission information from the second BSS, or lower than a priority corresponding to an universal EDCA parameter set.

In some embodiments, the restricting module 1702 is configured to:
control all stations of the second BSS to terminate transmission opportunities on the target channel before a start time corresponding to the target time; or
control all stations of the second BSS to be in a silent state on the target channel during a time period corresponding to the target time; or
allow all stations of the second BSS to compete for TXOPs on the target channel using a first EDCA parameter set during the time period corresponding to the target time; or
control all stations of the second BSS to terminate the transmission opportunities on the target channel before the start time corresponding to the target time, and control all stations of the second BSS to be in the silent state on the target channel during the time period corresponding to the target time; or
control all stations of the second BSS to terminate the transmission opportunities on the target channel before the start time corresponding to the target time, and allow all stations of the second BSS to compete for the TXOPs on the target channel using the first EDCA parameter set during the time period corresponding to the target time;
where a priority of the first EDCA parameter set is lower than a priority corresponding to a second EDCA parameter set used by a station of the first BSS that has monitored or received transmission information from the second BSS, or lower than a priority corresponding to the universal EDCA parameter set.

In some embodiments, the restricting module 1702 is configured to restrict transmission of the target station on the target channel and/or at the target time according to the information of the target resource and/or the information of the target station.

In some embodiments, the restricting module 1702 is configured to:
control the target station to terminate a transmission opportunity before a start time corresponding to the target time; or
control the target station to be in a silent state during a time period corresponding to the target time; or
allow the target station to compete for a TXOP using the first EDCA parameter set during the time period corresponding to the target time; or
control the target station to terminate the transmission opportunity before the start time corresponding to the target time, and control the target station to be in the silent state during the time period corresponding to the target time; or
control the target station to terminate the transmission opportunity before the start time corresponding to the target time, and allow the target station to compete for the TXOP using the first EDCA parameter set during the time period corresponding to the target time;
where a priority of the first EDCA parameter set is lower than a priority corresponding to the second EDCA parameter set used by the station of the first BSS that has monitored or received the transmission information from the second BSS, or lower than a priority corresponding to the universal EDCA parameter set.

In some embodiments, the restricting module 1702 is configured to:
control the target station to terminate a transmission opportunity on the target channel before a start time corresponding to the target time; or
control the target station to be in a silent state on the target channel during a time period corresponding to the target time; or
allow the target station to compete for a TXOP on the target channel using a first EDCA parameter set during the time period corresponding to the target time; or
control the target station to terminate the transmission opportunity on the target channel before the start time corresponding to the target time, and control the target station to be in the silent state on the target channel during the time period corresponding to the target time; or
control the target station to terminate the transmission opportunity on the target channel before the start time corresponding to the target time, and allow the target station to compete for the TXOP using the first EDCA parameter set during the time period corresponding to the target time on the target channel;
where a priority of the first EDCA parameter set is lower than a priority corresponding to a second EDCA parameter set used by the station of the first BSS that has monitored or received the transmission information from the second BSS, or lower than a priority corresponding to the universal EDCA parameter set.

In some embodiments, the restricting module 1702 is configured to restrict, based on a transmission role of the target station, the transmission of the target station on the target channel and/or at the target time according to the information of the target resource and/or the information of the target station;
where the transmission role is used to indicate that the target station is a transmission sender or a transmission receiver of the transmission information monitored or received by the station of the first BSS from the second BSS.

In some embodiments, in a case where the target station is the transmission sender, the restricting module 1702 is configured to:
control the target station to terminate a transmission opportunity before a start time corresponding to the target time; or
control the target station not to initiate a competition for a TXOP during a time period corresponding to the target time; or
allow the target station to compete for the TXOP using a first EDCA parameter set during the time period corresponding to the target time; or
control the target station to terminate the transmission opportunity before the start time corresponding to the target time, and control the target station not to initiate the competition for the TXOP during the time period corresponding to the target time; or
control the target station to terminate the transmission opportunity before the start time corresponding to the target time, and allow the target station to compete for the TXOP using a first EDCA parameter set during the time period corresponding to the target time;
where a priority of the first EDCA parameter set is lower than a priority corresponding to a second EDCA parameter set used by the station of the first BSS that has monitored or received the transmission information from the second BSS, or lower than a priority corresponding to an universal EDCA parameter set.

In some embodiments, in a case where the target station is the transmission sender, the restricting module 1702 is configured to:
control the target station to terminate a transmission opportunity on the target channel before a start time corresponding to the target time; or
control the target station not to initiate a competition for a TXOP on the target channel during a time period corresponding to the target time; or
allow the target station to compete for the TXOP on the target channel using a first EDCA parameter set during the time period corresponding to the target time; or
control the target station to terminate the transmission opportunity on the target channel before the start time corresponding to the target time, and control the target station not to initiate the competition for the TXOP on the target channel during the time period corresponding to the target time; or
control the target station to terminate the transmission opportunity on the target channel before the start time corresponding to the target time, and allow the target station to compete for the TXOP on the target channel using the first EDCA parameter set during the time period corresponding to the target time;
where a priority of the first EDCA parameter set is lower than a priority corresponding to a second EDCA parameter set used by the station of the first BSS that has monitored or received the transmission information from the second BSS, or lower than a priority corresponding to an universal EDCA parameter set.

In some embodiments, in a case where the target station is the transmission receiver, the restricting module 1702 is configured to allow the target station to initiate transmission on the target channel and/or at the target time and transmit a specified type frame to a second STA device; and/or prohibit the target station from transmitting a frame other than the specified type frame to the second STA device on the target channel and/or at the target time, where the second STA device is a station which transmits transmission information in the transmission information monitored or received by the station of the first BSS to the target station from the second BSS, a length of a response frame of the specified type frame is less than or equal to a frame length threshold.

In some embodiments, the universal EDCA parameter set is an MU EDCA parameter set.

In some embodiments, the information of the target resource includes information of the target channel.

In some embodiments, the target channel includes all or part of channels used by a station of the first BSS that has monitored or received the transmission information from the second BSS.

In some embodiments, the target channel is a working channel on a link corresponding to an r-TWT operation established in the first BSS.

In some embodiments, the target time is a time for a station of the first BSS that has monitored or received transmission information from the second BSS to perform channel competition and/or transmission.

In some embodiments, information of the target time includes: information of a time period corresponding to a restricted target wake-up time (r-TWT) service period of a station of the first BSS that has monitored or received the transmission information from the second BSS.

In some embodiments, information of the target time includes: information of a time period that overlaps with the r-TWT service period of a station of the first BSS that has monitored or received transmission information from the second BSS.

In some embodiments, the restricting module 1702 is configured to transmit a channel resource protection enable notification frame to a third STA device of the second BSS according to the information of the target resource and/or the information of the target station, where the channel resource protection enable notification frame is used to indicate that the third STA device restricts transmission on the target channel and/or at the target time.

In some embodiments, the channel resource protection enable notification frame includes a protected period element;
where the protected period element includes a protected period control field, a protected period count field, a protected period field, a protected period duration field, and a protected period offset field;
where the protected period control field is used to indicate a mode for restricting transmission corresponding to time information;
the protected period count field is used to indicate the number of TBTTs to reach a beacon interval where a start time of a next time period is located;
the protected period field is used to indicate the number of beacon intervals between start times of time periods;
the protected period duration field is used to indicate a duration of the time period; and
the protected period offset field is used to indicate an offset value between a start time of the time period and a TBTT defined by the protected period count field.

In some embodiments, the protected period control field includes a resource protection mode indication bitmap; where each bit position in the resource protection mode indication bitmap corresponds to a resource protection mode, and a bit value of each bit position in the resource protection mode indication bitmap is used to indicate whether the corresponding resource protection mode is enabled.

In some embodiments, the apparatus further includes: a transmitting module, configured to transmit a channel resource protection operation notification frame to the third STA device, where the channel resource protection operation notification frame is used to indicate that the third STA device terminates or restarts the restriction on the transmission on the target channel and/or at the target time.

In some embodiments, the channel resource protection operation notification frame includes an indication mark; where
the indication mark is used to indicate terminating or restarting the restriction on transmission on the target channel and/or at the target time.

In some embodiments, the receiving module 1701 is configured to receive the information of the target resource and/or the information of the target station directly transmitted by the first AP device; or receive the information of the target resource and/or the information of the target station indirectly forwarded by the first AP device via non-AP stations of the first BSS and the second BSS.

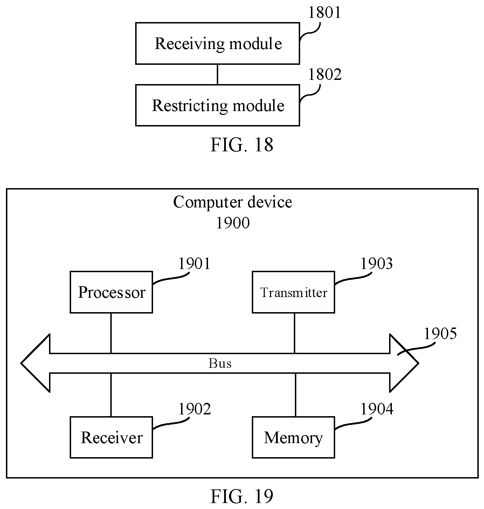

Referring to FIG. 18, a block diagram of an apparatus for transmission provided in an embodiment of the present application is illustrated. The apparatus has functions for implementing the steps in the above-mentioned method for transmission, which are performed by a third STA device of a second BSS, and the third STA device is a non-access point AP STA. As shown in FIG. 18, the apparatus may include:
a receiving module, configured to receive a channel resource protection enable notification frame transmitted by a second AP device of the second BSS, where the channel resource protection enable notification frame is transmitted by the second AP device after receiving information of a target resource and/or information of a target station transmitted by a first AP device of a first BSS, the information of the target resource and/or the information of the target station is shared by the first AP device according to monitoring or receiving condition information, the monitoring or receiving condition information is used to indicate transmission information of a target station of the second BSS, which is monitored or received by a station of the first BSS, and the target station is a station whose initiated transmission influences on or interferes with a frame exchange in the first BSS by the station of the first BSS; and
a restricting module, configured to restrict transmission of a third STA device on a target channel and/or at a target time according to the channel resource protection enable notification frame, where the target channel and/or the target time is a channel and/or a time on which medium access protection needs to be performed of the first BSS.

In some embodiments, the restricting module 1802 is configured to:
terminate a TXOP before a start time corresponding to the target time; or
control all stations of the second BSS to be in a silent state during a time period corresponding to the target time; or
not initiate a competition for a TXOP during the time period corresponding to the target time; or
compete for the TXOP during the time period corresponding to the target time using a first EDCA parameter set, where a priority of the first EDCA parameter set is lower than a priority corresponding to a second EDCA parameter set used by a station of the BSS that has monitored or received transmission information from the second BSS, or lower than a priority corresponding to an universal EDCA parameter set; or
terminate the TXOP before the start time corresponding to the target time, and be in the silent state during the time period corresponding to the target time; or
terminate the TXOP before the start time corresponding to the target time, and not initiate the competition for the TXOP during the time period corresponding to the target time; or
terminate the TXOP before the start time corresponding to the target time, and allow competing for the TXOP using the first EDCA parameter set during the time period corresponding to the target time; or
allow initiating transmission on the target channel and/or at the target time and transmit a specified type frame to a second STA device, and/or prohibit transmitting a frame other than the specified type frame to the second STA device, where the second STA device is a station which transmits transmission information to the third STA device in the transmission information monitored or received by the station of the first BSS from the second BSS, and a length of a response frame of the specified type frame is less than or equal to a frame length threshold.

In some embodiments, the restricting module 1802 is configured to:
terminate a TXOP on the target channel before a start time corresponding to the target time; or
control all stations of the second BSS to be in a silent state on the target channel during a time period corresponding to the target time; or
not initiate a competition for a TXOP on the target channel during the time period corresponding to the target time; or
compete for the TXOP on the target channel during the time period corresponding to the target time using a first EDCA parameter set, where a priority of the first EDCA parameter set is lower than a priority corresponding to a second EDCA parameter set used by a station of the BSS that has monitored or received transmission information from the second BSS, or lower than a priority corresponding to an universal EDCA parameter set; or
terminate the TXOP on the target channel before the start time corresponding to the target time, and be in the silent state on the target channel during the time period corresponding to the target time; or
terminate the TXOP on the target channel before the start time corresponding to the target time, and not initiate the competition for the TXOP on the target channel during the time period corresponding to the target time; or
terminate the TXOP on the target channel before the start time corresponding to the target time, and allow competing for the TXOP on the target channel during the time period corresponding to the target time using the first EDCA parameter set; or
allow initiating transmission on the target channel and/or at the target time and transmit a specified type frame to a second STA device, and/or prohibit transmitting a frame other than the specified type frame to the second STA device on the target channel and/or at the target time; where the second STA device is a station which transmits transmission information to the third STA device in the transmission information monitored or received by the station of the first BSS from the second BSS, and a length of a response frame of the specified type frame is less than or equal to a frame length threshold.

In some embodiments, the universal EDCA parameter set is an MU EDCA parameter set.

In some embodiments, the information of the target resource includes information of the target channel.

In some embodiments, the target channel includes all or part of channels used by a station of the first BSS that has monitored or received the transmission information from the second BSS.

In some embodiments, the target channel is a working channel on a link corresponding to an r-TWT operation established in the first BSS.

In some embodiments, the target time is a time for a station of the first BSS that has monitored or received transmission information from the second BSS to perform channel competition and/or transmission.

In some embodiments, information of the target time includes: information of a time period corresponding to a restricted target wake-up time (r-TWT) service period of a station of the first BSS that has monitored or received transmission information from the second BSS.

In some embodiments, the information of the target time includes: information of a time period that overlaps with the r-TWT service period of the station of the first BSS that has monitored or received transmission information from the second BSS.

In some embodiments, the channel resource protection enable notification frame includes a protected period element; where
the protected period element includes a protected period control field, a protected period count field, a protected period field, a protected period duration field, and a protected period offset field;
where the protected period control field is used to indicate a mode for restricting transmission corresponding to time information;
the protected period count field is used to indicate the number of TBTTs to reach a beacon interval where a start time of a next time period is located;
the protected period field is used to indicate the number of beacon intervals between start times of time periods;
the protected period duration field is used to indicate a duration of the time period; and
the protected period offset field is used to indicate an offset value between a start time of the time period and a TBTT defined by the protected period count field.

In some embodiments, the protected period control field includes a resource protection mode indication bitmap; where
each bit position in the resource protection mode indication bitmap corresponds to a resource protection mode, and a bit value of each bit position in the resource protection mode indication bitmap is used to indicate whether the corresponding resource protection mode is enabled.

In some embodiments, the receiving module 1801 is further configured to receive a channel resource protection operation notification frame transmitted by the second AP device, where the channel resource protection operation notification frame is used to indicate that the third STA device terminates or restarts the restriction on the transmission on the target channel and/or at the target time.

In some embodiments, the channel resource protection operation notification frame includes an indication mark; where
the indication mark is used to indicate terminating or restarting the restriction on transmission on the target channel and/or at the target time.

It should be explained that the apparatuses provided in the above embodiments, when implement their functions, are explained only using the division of the above-mentioned functional modules as an example. In actual applications, the above-mentioned functions may be assigned to different functional modules according to actual conditions, that is, the content structure of the device may be divided into different functional modules to complete all or part of the functions described above.

Regarding the apparatuses in the above embodiments, the specific manner of which each module performs operations has been described in detail in the embodiments of the methods, which will not be repeated here.

Referring to FIG. 19, a schematic structure diagram of a computer device 1900 provided in an embodiment of the present application is illustrated. The computer device 1900 may include: a processor 1901, a receiver 1902, a transmitter 1903, a memory 1904 and a bus 1905.

The processor 1901 includes one or more processing cores. The processor 1901 performs various functional applications and information processing by running software programs and modules.

The receiver 1902 and the transmitter 1903 may be implemented as a communication component, which may be a communication chip. The communication chip may also be referred to as a transceiver.

The memory 1904 is connected to the processor 1901 via the bus 1905.

The memory 1904 may be configured to store a computer program, and the processor 1901 may be configured to run the computer program to implement each step performed by the STA device or the AP device in the above method embodiments.

In addition, the memory 1904 may be implemented by any type of volatile (transitory) or non-volatile (non-transitory) storage device or a combination thereof, and the volatile or non-volatile storage device includes but is not limited to: a magnetic disk or optical disk, an electrically erasable programmable read-only memory, an erasable programmable read-only memory, a static access memory, a read-only memory, a magnetic memory, a flash memory, or a programmable read-only memory.

In the exemplary embodiments, the computer device includes a processor, a memory, and a transceiver (the transceiver may include a receiver and a transmitter, the receiver is configured to receive information, and the transmitter is configured to transmit information).

In one possible implementation, in a case where the computer device is a STA device, and the STA device may be a first STA device of a first BSS, the transceiver is configured to: monitor or receive a data unit on a first BSS channel, to obtain first monitoring or receiving condition information, where the first monitoring or receiving condition information is used to indicate transmission information of a first target station of a second BSS, which is monitored or received by the first STA device, and the first target station is a station whose initiated transmission influences on or interferes with a frame exchange in the first BSS by the first STA device; and report the first monitoring or receiving condition information to the first AP device of the first BSS.

In one possible implementation, in a case where the computer device is a STA device, and the STA device is a third STA device of a second BSS, the transceiver is configured to receive a channel resource protection enable notification frame transmitted by a second AP device of the second BSS, where the channel resource protection enable notification frame is transmitted by a second AP device after receiving information of a target resource and/or information of a target station transmitted by a first AP device of a first BSS; the information of the target resource and/or the information of the target station is shared by a first AP device according to monitoring or receiving condition information; the monitoring or receiving condition information is used to indicate transmission information of a target station of the second BSS, which is monitored or received by a station of the first BSS, and the target station is a station whose initiated transmission influences on or interferes with a frame exchange in the first BSS by the station of the first BSS; and the processor is configured to restrict transmission of the third STA device on a target channel and/or at a target time according to the channel resource protection enable notification frame, where the target channel and/or the target time is a channel and/or a time on which medium access protection needs to be performed of the first BSS.

In a case where the computer device is the STA device, the processor may be configured to perform all or part of the steps performed by the first STA device or the third STA device in the embodiments shown in FIG. 2, 5 or 7 via the transceiver, which will not be repeated here.

In one possible implementation, in a case where the computer device is an AP device, and the AP device is an AP device of a first BSS, the transceiver is configured to: obtain monitoring or receiving condition information, where the monitoring or receiving condition information is used to indicate transmission information of a target station of a second BSS, which is monitored or received by a station of the first BSS on a first BSS channel, the target station is a station whose initiated transmission influences on or interferes with a frame exchange in the first BSS by a station of the first BSS; and share information of a target resource and/or information of the target station with a second AP device of the second BSS according to the monitoring or receiving condition information, where the information of the target resource and/or the information of the target station is used for the second AP device to restrict transmission of a station of the second BSS on a target channel and/or at a target time, and the target channel and/or the target time is a channel and/or a time on which media access protection needs to be performed of the first BSS.

In one possible implementation, in a case where the computer device is an AP device, and the AP device is an AP device of a second BSS, the transceiver is configured to receive information of a target resource and/or information of a target station shared by a first AP device of a first BSS, where the information of the target resource and/or the information of the target station is shared by the first AP device according to monitoring or receiving condition information, the monitoring or receiving condition information is used to indicate transmission information of the target station of the second BSS, which is monitored or received by a station of the first BSS, and the target station is a station whose initiated transmission influences on or interferes with a frame exchange in the first BSS by the station of the first BSS; and the processor is configured to restrict transmission of a station of the second BSS on a target channel and/or at a target time according to the information of the target resource and/or the information of the target station, where the target channel and/or target time is a channel and/or a time on which medium access protection needs to be performed of the first BS.

In a case where the computer device is the AP device, the processor and the transceiver may be configured to perform all or part of the steps performed by the first AP device or the second AP device in the embodiments shown in FIG. 3, 4 or 7 above, which will not be repeated here.

A computer-readable storage medium is further provided in the embodiments of the present application, a computer program is stored in the computer-readable storage medium. The computer program is loaded and run by a processor of a computer device, to cause the computer device to perform each step performed by the first STA device, the first AP device, the second AP device, or the third STA device in the method shown in FIG. 2 to 5, or 7 above.

A computer program product is further provided in the present application, the computer program product includes computer instructions stored in a computer-readable storage medium. The processor of the computer device reads the computer instructions from the computer-readable storage medium, and run the computer instructions, to cause the computer device to perform each step performed by the first STA device, the first AP device, the second AP device or the third STA device in the method shown in FIG. 2 to 5 or 7 above.

A chip is provided in the present application, the chip includes: a processor, configured to call a computer program from a memory, and run the computer program, to cause a computer device equipped with the chip to perform each step performed by a first STA device, a first AP device, a second AP device or a third STA device in the method shown in FIG. 2 to 5 or 7 above.

A computer program is further provided in the present application, the computer program is run by a processor of a computer device, to cause the computer device to perform each step performed by the first STA device, the first AP device, the second AP device or the third STA device in the method shown in FIG. 2 to 5 or 7 above.

Those skilled in the art should be aware that in one or more of the above examples, the functions described in the embodiments of the present application may be implemented by hardware, software, firmware or any combination thereof. When implemented using software, the functions may be stored in or transmitted as one or more instructions or codes on a computer-readable medium. The computer-readable medium includes both computer storage medium and communication medium, where the communication medium includes any medium that is convenient for transferring a computer program from one place to another place. The storage medium may be any available medium that can be accessed by a general purpose computer or a special purpose computer.

The above description is only exemplary embodiments of the present application and does not intended to limit the present application. Any modifications, equivalent substitutions, improvements, etc. made within the spirit and principles of the present application shall be included in the protection scope of the present application.

## Claims

1. A method for transmission, performed by a first station (STA) device of a first basic service set (BSS), wherein the first STA device is a non-access point station (non-AP STA), and the method comprises:
monitoring or receiving a data unit on a first BSS channel, to obtain first monitoring or receiving condition information, wherein the first monitoring or receiving condition information is used to indicate transmission information of a first target station of a second BSS, which is monitored or received by the first STA device, and the first target station is a station whose initiated transmission influences on or interferes with a frame exchange in the first BSS by the first STA device; and
reporting the first monitoring or receiving condition information to a first AP device of the first BSS.

2. The method according to claim 1, wherein the first monitoring or receiving condition information is used for the first access point (AP) device of the first BSS to share information of a target resource and/or information of a target station with a second AP device of the second BSS, the information of the target resource and/or the information of the target station is used for the second AP device to restrict transmission of a station of the second BSS on a target channel and/or at a target time, and the target channel and/or the target time is a channel and/or a time on which media access protection needs to be performed of the first BSS.

3. The method according to claim 1 or 2, wherein the second BSS is an overlapping basic service set (OBSS) of the first BSS or a BSS operating on a same channel with the first BSS.

4. The method according to any one of claims 1 to 3, wherein the first monitoring or receiving condition information comprises station information of the first target station.

5. The method according to any one of claims 1 to 4, wherein the data unit comprises a physical layer protocol data unit (PPDU).

6. The method according to claim 5, wherein the method further comprises:
in a case where BSS identifier information comprised in a monitored or received first PPDU is different from BSS identifier information of the first BSS, determining that station information carried by the first PPDU comprises information of the first target station.

7. The method according to claim 6, wherein the BSS identifier information comprises at least one of: a BSSID or a BSS color.

8. The method according to any one of claims 5 to 7, wherein a report message frame for reporting the first monitoring or receiving condition information comprises PPDU transmission information carried by a PPDU monitored or received by the first STA device, and the PPDU transmission information comprises at least one of following transmission sub-information:
a transmission type, a BSS color, a BSSID, a sender association identifier (AID), sender partial AID, a sender MAC address, a receiver AID, receiver partial AID, or a receiver MAC address;
wherein the transmission type comprises uplink transmission, downlink transmission or point-to-point (P2P) transmission.

9. The method according to claim 8, wherein the report message frame comprises a PPDU transmission information element, the PPDU transmission information element comprises: a PPDU transmission information control field, and a PPDU transmission information field; wherein
the PPDU transmission control information field is used to indicate an information format of the PPDU transmission information field, and
the PPDU transmission information field is used to carry the PPDU transmission information.

10. The method according to claim 9, wherein the PPDU transmission control information field comprises at least one of following information:
PPDU type indication information, used to indicate whether the monitored or received PPDU comes from a BSS other than the first BSS;
the amount of PPDU transmission information; or
a bitmap of the PPDU transmission information, used to indicate an information type of transmission sub-information comprised in the PPDU transmission information.

11. The method according to claim 10, wherein each bit position in the bitmap of the PPDU transmission information corresponds to a type of transmission sub-information, and a bit value of each bit position in the bitmap of the PPDU transmission information is used to indicate whether corresponding transmission sub-information exists in the PPDU transmission information field.

12. The method according to any one of claims 1 to 11, wherein a report message frame for reporting the first monitoring or receiving condition information is a radio measurement report frame.

13. The method according to any one of claims 1 to 12, wherein reporting the first monitoring or receiving condition information to the first AP device of the first BSS comprises:
in a case where a radio measurement request frame is received and a measurement type corresponding to the radio measurement request frame comprises a specified measurement type, reporting the first monitoring or receiving condition information to the first AP device.

14. The method according to claim 13, wherein the specified measurement type comprises: a frame measurement type.

15. A method for transmission, performed by a first AP device of a first BSS and comprising:
obtaining monitoring or receiving condition information, wherein the monitoring or receiving condition information is used to indicate transmission information of a target station of a second BSS, which is monitored or received by a station of the first BSS on a first BSS channel, and the target station is a station whose initiated transmission influences on or interferes with a frame exchange in the first BSS by the station of the first BSS; and
sharing information of a target resource and/or information of the target station with a second AP device of the second BSS according to the monitoring or receiving condition information, wherein the information of the target resource and/or the information of the target station is used for the second AP device to restrict transmission of a station of the second BSS on a target channel and/or at a target time, and the target channel and/or the target time is a channel and/or a time on which media access protection needs to be performed of the first BSS.

16. The method according to claim 15, wherein the second BSS is an overlapping basic service set (OBSS) of the first BSS or a BSS operating on a same channel with the first BSS.

17. The method according to claim 15 or 16, wherein the monitoring or receiving condition information comprises station information of the target station.

18. The method according to any one of claims 15 to 17, wherein obtaining the monitoring or receiving condition information comprises:
receiving first monitoring or receiving condition information reported by a first STA device of the first BSS, wherein the first STA device is a non-AP STA, the first monitoring or receiving condition information is used to indicate transmission information of a first target station of the second BSS, which is monitored or received by the first STA device, and the first target station is a station whose initiated transmission influences on or interferes with a frame exchange in the first BSS by the first STA device; and/or
monitoring or receiving a data unit to obtain second monitoring or receiving condition information, wherein the second monitoring or receiving condition information is used to indicate transmission information of a second target station of the second BSS, which is monitored or received by the first AP device, and the second target station is a station whose initiated transmission influences on or interferes with a frame exchange in the first BSS by the first AP device.

19. The method according to claim 18, wherein the data unit comprises a physical layer protocol data unit (PPDU).

20. The method according to claim 19, wherein the second monitoring or receiving condition information comprises PPDU transmission information carried by a PPDU monitored or received by the first AP device, and the PPDU transmission information comprises at least one of following transmission sub-information:
a transmission type, a BSS color, a BSSID, a sender association identifier (AID), sender partial AID, a sender MAC address, a receiver association identifier (AID), receiver partial AID, or a receiver MAC address;
wherein the transmission type comprises uplink transmission, downlink transmission or point-to-point (P2P) transmission.

21. The method according to claim 19, wherein a report message frame for reporting the first monitoring or receiving condition information comprises PPDU transmission information carried by a PPDU monitored or received by the first STA device, and the PPDU transmission information comprises at least one of following transmission sub-information:
a transmission type, a BSS color, a BSSID, a sender association identifier (AID), sender partial AID, a sender MAC address, a receiver association identifier (AID), receiver partial AID, a receiver MAC address;
wherein the transmission type comprises uplink transmission, downlink transmission or point-to-point (P2P) transmission.

22. The method according to claim 21, wherein the report message frame comprises a PPDU transmission information element, the PPDU transmission information element comprises: a PPDU transmission information control field, and a PPDU transmission information field; wherein
the PPDU transmission control information field is used to indicate an information format of the PPDU transmission information field, and
the PPDU transmission information field is used to carry the PPDU transmission information.

23. The method according to claim 22, wherein the PPDU transmission control information field comprises at least one of following information:
PPDU type indication information, used to indicate whether the monitored or received PPDU comes from a BSS other than the first BSS;
the amount of PPDU transmission information; or
a bitmap of the PPDU transmission information, used to indicate an information type of transmission sub-information comprised in the PPDU transmission information.

24. The method according to claim 23, wherein each bit position in the bitmap of the PPDU transmission information corresponds to a type of transmission sub-information, and a bit value of each bit position in the bitmap of the PPDU transmission information is used to indicate whether corresponding transmission sub-information exists in the PPDU transmission information.

25. The method according to any one of claims 18 to 24, wherein receiving the first monitoring or receiving condition information reported by the first STA device of the first BSS comprises:
receiving the first monitoring or receiving condition information reported by the first STA device via a radio measurement report frame.

26. The method according to claim 25, wherein the method further comprises:
transmitting a radio measurement request frame to the first STA device, wherein a measurement type corresponding to the radio measurement request frame comprises a specified measurement type.

27. The method according to claim 26, wherein the specified measurement type comprises: a frame measurement type.

28. The method according to any one of claims 15 to 27, wherein the information of the target resource comprises information of the target channel.

29. The method according to claim 28, wherein the target channel comprises all or part of channels used by a station of the first BSS that has monitored or received transmission information from the second BSS.

30. The method according to claim 29, wherein the target channel is a working channel on a link corresponding to an r-TWT operation established in the first BSS.

31. The method according to any one of claims 15 to 27, wherein the target time is a time for a station of the first BSS that has monitored or received transmission information from the second BSS to perform channel competition and/or transmission.

32. The method according to claim 31, wherein information of the target time comprises:
information of a time period corresponding to a restricted target wake-up time (r-TWT) service period of a station of the first BSS that has monitored or received the transmission information from the second BSS.

33. The method according to claim 32, wherein time information of the first channel resource comprises:
information of a time period that overlaps with the r-TWT service period of the station of the first BSS that has monitored or received transmission information from the second BSS.

34. A method for transmission, performed by a second AP device of a second BSS and comprises:
receiving information of a target resource and/or information of a target station shared by a first AP device of a first BSS, wherein the information of the target resource and/or the information of the target station is shared by the first AP device according to monitoring or receiving condition information, the monitoring or receiving condition information is used to indicate transmission information of a target station of the second BSS, which is monitored or received by a station of the first BSS, and the target station is a station whose initiated transmission influences on or interferes with a frame exchange in the first BSS by the station of the first BSS; and
restricting transmission of a station of the second BSS on a target channel and/or at a target time according to the information of the target resource and/or the information of the target station, wherein the target channel and/or the target time is a channel and/or a time on which medium access protection needs to be performed of the first BSS.

35. The method according to claim 34, wherein restricting the transmission of the station of the second BSS on the target channel and/or at the target time according to the information of the target resource and/or the information of the target station comprises:
restricting transmission of all stations of the second BSS on the target channel and/or at the target time according to the information of the target resource and/or the information of the target station.

36. The method according to claim 35, wherein restricting the transmission of all stations of the second BSS at the target time comprises:
controlling all stations of the second BSS to terminate transmission opportunities before a start time corresponding to the target time; or
controlling all stations of the second BSS to be in a silent state during a time period corresponding to the target time; or
allowing all stations of the second BSS to compete for TXOPs using a first EDCA parameter set during the time period corresponding to the target time; or
controlling all stations of the second BSS to terminate the transmission opportunities before the start time corresponding to the target time, and controlling all stations of the second BSS to be in the silent state during the time period corresponding to the target time; or
controlling all stations of the second BSS to terminate the transmission opportunities before the start time corresponding to the target time, and allowing all stations of the second BSS to compete for the TXOPs using the first EDCA parameter set during the time period corresponding to the target time;
wherein a priority of the first EDCA parameter set is lower than a priority corresponding to a second EDCA parameter set used by a station of the first BSS that has monitored or received transmission information from the second BSS, or lower than a priority corresponding to an universal EDCA parameter set.

37. The method according to claim 35, wherein restricting the transmission of the station of the second BSS on the target channel and at the target time comprises:
controlling all stations of the second BSS to terminate transmission opportunities on the target channel before a start time corresponding to the target time; or
controlling all stations of the second BSS to be in a silent state on the target channel during a time period corresponding to the target time; or
allowing all stations of the second BSS to compete for TXOPs on the target channel using a first EDCA parameter set during the time period corresponding to the target time; or
controlling all stations of the second BSS to terminate the transmission opportunities on the target channel before the start time corresponding to the target time, and controlling all stations of the second BSS to be in the silent state on the target channel during the time period corresponding to the target time; or
controlling all stations of the second BSS to terminate the transmission opportunities on the target channel before the start time corresponding to the target time, and allowing all stations of the second BSS to compete for the TXOPs on the target channel using the first EDCA parameter set during the time period corresponding to the target time;
wherein a priority of the first EDCA parameter set is lower than a priority corresponding to a second EDCA parameter set used by a station of the first BSS that has monitored or received transmission information from the second BSS, or lower than a priority corresponding to an universal EDCA parameter set.

38. The method according to claim 34, wherein restricting the transmission of the station of the second BSS on the target channel and/or at the target time according to the information of the target resource and/or the information of the target station comprises:
restricting transmission of the target station on the target channel and/or at the target time according to the information of the target resource and/or the information of the target station.

39. The method according to claim 38, wherein restricting the transmission of the target station at the target time comprises:
controlling the target station to terminate a transmission opportunity before a start time corresponding to the target time; or
controlling the target station to be in a silent state during a time period corresponding to the target time; or
allowing the target station to compete for a TXOP using a first EDCA parameter set during the time period corresponding to the target time; or
controlling the target station to terminate the transmission opportunity before the start time corresponding to the target time, and controlling the target station to be in the silent state during the time period corresponding to the target time; or
controlling the target station to terminate the transmission opportunity before the start time corresponding to the target time, and allowing the target station to compete for the TXOP using the first EDCA parameter set during the time period corresponding to the target time;
wherein a priority of the first EDCA parameter set is lower than a priority corresponding to a second EDCA parameter set used by the station of the first BSS that has monitored or received the transmission information from the second BSS, or lower than a priority corresponding to an universal EDCA parameter set.

40. The method according to claim 38, wherein restricting the transmission of the target station on the target channel and at the target time comprises:
controlling the target station to terminate a transmission opportunity on the target channel before a start time corresponding to the target time; or
controlling the target station to be in a silent state on the target channel during a time period corresponding to the target time; or
allowing the target station to compete for a TXOP on the target channel using a first EDCA parameter during the time period corresponding to the target time; or
controlling the target station to terminate the transmission opportunity on the target channel before the start time corresponding to the target time, and controlling the target station to be in the silent state on the target channel during the time period corresponding to the target time; or
controlling the target station to terminate the transmission opportunity on the target channel before the start time corresponding to the target time, and allowing the target station to compete for the TXOP using the first EDCA parameter set during the time period corresponding to the target time on the target channel;
wherein a priority of the first EDCA parameter set is lower than a priority corresponding to a second EDCA parameter set used by the station of the first BSS that has monitored or received the transmission information from the second BSS, or lower than a priority corresponding to an universal EDCA parameter set.

41. The method according to claim 38, wherein restricting the transmission of the target station on the target channel and/or at the target time according to the information of the target resource and/or the information of the target station comprises:
restricting, based on a transmission role of the target station, the transmission of the target station on the target channel and/or at the target time according to the information of the target resource and/or the information of the target station;
wherein the transmission role is used to indicate that the target station is a transmission sender or a transmission receiver of the transmission information monitored or received by the station of the first BSS from the second BSS.

42. The method according to claim 41, wherein in a case where the target station is the transmission sender, restricting the transmission of the target station at the target time comprises:
controlling the target station to terminate a transmission opportunity before a start time corresponding to the target time; or
controlling the target station not to initiate a competition for a TXOP during a time period corresponding to the target time; or
allowing the target station to compete for the TXOP using a first EDCA parameter set during the time period corresponding to the target time; or
controlling the target station to terminate the transmission opportunity before the start time corresponding to the target time, and controlling the target station not to initiate the competition for the TXOP during the time period corresponding to the target time; or
controlling the target station to terminate the transmission opportunity before the start time corresponding to the target time, and allowing the target station to compete for the TXOP using a first EDCA parameter set during the time period corresponding to the target time;
wherein a priority of the first EDCA parameter set is lower than a priority corresponding to a second EDCA parameter set used by the station of the first BSS that has monitored or received the transmission information from the second BSS, or lower than a priority corresponding to an universal EDCA parameter set.

43. The method according to claim 41, wherein in a case where the target station is the transmission sender, restricting the transmission of the target station on the target channel and at the target time comprises:
controlling the target station to terminate a transmission opportunity on the target channel before a start time corresponding to the target time; or
controlling the target station not to initiate a competition for a TXOP on the target channel during a time period corresponding to the target time; or
allowing the target station to compete for the TXOP on the target channel using a first EDCA parameter set during the time period corresponding to the target time; or
controlling the target station to terminate the transmission opportunity on the target channel before the start time corresponding to the target time, and controlling the target station not to initiate the competition for the TXOP on the target channel during the time period corresponding to the target time; or
controlling the target station to terminate the transmission opportunity on the target channel before the start time corresponding to the target time, and allowing the target station to compete for the TXOP on the target channel using the first EDCA parameter set during the time period corresponding to the target time;
wherein a priority of the first EDCA parameter set is lower than a priority corresponding to a second EDCA parameter set used by the station of the first BSS that has monitored or received the transmission information from the second BSS, or lower than a priority corresponding to an universal EDCA parameter set.

44. The method according to claim 41, wherein in a case where the target station is the transmission receiver, restricting the transmission of the target station on the target channel and/or at the target time comprises:
allowing the target station to initiate transmission on the target channel and/or at the target time and transmit a specified type frame to a second STA device; and/or
prohibiting the target station from transmitting a frame other than the specified type frame to the second STA device on the target channel and/or at the target time, wherein the second STA device is a station which transmits transmission information in the transmission information monitored or received by the station of the first BSS to the target station from the second BSS, a length of a response frame of the specified type frame is less than or equal to a frame length threshold.

45. The method according to any one of claims 36, 37, 39, 40, 42 and 43, wherein the universal EDCA parameter set is an MU EDCA parameter set.

46. The method according to any one of claims 35 to 45, wherein the information of the target resource comprises information of the target channel.

47. The method according to claim 46, wherein the target channel comprises all or part of channels used by a station of the first BSS that has monitored or received the transmission information from the second BSS.

48. The method according to claim 47, wherein the target channel is a working channel on a link corresponding to an r-TWT operation established in the first BSS.

49. The method according to any one of claims 35 to 45, wherein the target time is a time for a station of the first BSS that has monitored or received transmission information from the second BSS to perform channel competition and/or transmission.

50. The method according to claim 49, wherein information of the target time comprises:
information of a time period corresponding to a restricted target wake-up time (r-TWT) service period of a station of the first BSS that has monitored or received the transmission information from the second BSS.

51. The method according to claim 50, wherein the information of the target time comprises:
information of a time period that overlaps with the r-TWT service period of the station of the first BSS that has monitored or received transmission information from the second BSS.

52. The method according to claim 50 or 51, wherein restricting the transmission of the station of the second BSS on the target channel and/or at the target time according to the information of the target resource and/or the information of the target station comprises:
transmitting a channel resource protection enable notification frame to a third STA device of the second BSS according to the information of the target resource and/or the information of the target station, wherein the channel resource protection enable notification frame is used to indicate that the third STA device restricts transmission on the target channel and/or at the target time.

53. The method according to claim 52, wherein the channel resource protection enable notification frame comprises a protected period element;
wherein the protected period element comprises a protected period control field, a protected period count field, a protected period field, a protected period duration field, and a protected period offset field;
wherein the protected period control field is used to indicate a mode for restricting transmission corresponding to time information;
the protected period count field is used to indicate the number of TBTTs to reach a beacon interval where a start time of a next time period is located;
the protected period field is used to indicate the number of beacon intervals between start times of time periods;
the protected period duration field is used to indicate a duration of the time period; and
the protected period offset field is used to indicate an offset value between a start time of the time period and a TBTT defined by the protected period count field.

54. The method according to claim 53, wherein the protected period control field comprises a resource protection mode indication bitmap; wherein
each bit position in the resource protection mode indication bitmap corresponds to a resource protection mode, and a bit value of each bit position in the resource protection mode indication bitmap is used to indicate whether the corresponding resource protection mode is enabled.

55. The method according to any one of claims 52 to 54, wherein the method further comprises:
transmitting a channel resource protection operation notification frame to the third STA device, wherein the channel resource protection operation notification frame is used to indicate that the third STA device terminates or restarts the restriction on the transmission on the target channel and/or at the target time.

56. The method according to claim 55, wherein the channel resource protection operation notification frame comprises an indication mark; wherein
the indication mark is used to indicate terminating or restarting the restriction on the transmission on the target channel and/or at the target time.

57. The method according to any one of claims 35 to 56, wherein receiving the information of the target resource and/or the information of the target station shared by the first AP device of the first BSS comprises:
receiving the information of the target resource and/or the information of the target station directly transmitted by the first AP device; or
receiving the information of the target resource and/or the information of the target station indirectly forwarded by the first AP device via non-AP stations of the first BSS and the second BSS.

58. A transmission control method, performed by a third STA device of a second BSS, wherein the third STA device is a non-AP STA, and the method comprises:
receiving a channel resource protection enable notification frame transmitted by a second AP device of the second BSS, wherein the channel resource protection enable notification frame is transmitted by the second AP device after receiving information of a target resource and/or information of a target station transmitted by a first AP device of a first BSS, the information of the target resource and/or the information of the target station is shared by the first AP device according to monitoring or receiving condition information, the monitoring or receiving condition information is used to indicate transmission information of a target station of the second BSS, which is monitored or received by a station of the first BSS, and the target station is a station whose initiated transmission influences on or interferes with a frame exchange in the first BSS by the station of the first BSS; and
restricting transmission of the third STA device on a target channel and/or at a target time according to the channel resource protection enable notification frame, wherein the target channel and/or the target time is a channel and/or a time on which medium access protection needs to be performed of the first BSS.

59. The method according to claim 58, wherein restricting the transmission of the third STA device at the target time corresponding to a signal interference comprises:
terminating a TXOP before a start time corresponding to the target time; or
controlling all stations of the second BSS to be in a silent state during a time period corresponding to the target time; or
not initiating a competition for a TXOP during the time period corresponding to the target time; or
competing for the TXOP during the time period corresponding to the target time using a first EDCA parameter set, wherein a priority of the first EDCA parameter set is lower than a priority corresponding to a second EDCA parameter set used by a station of the BSS that has monitored or received transmission information from the second BSS, or lower than a priority corresponding to an universal EDCA parameter set; or
terminating the TXOP before the start time corresponding to the target time, and being in the silent state during the time period corresponding to the target time; or
terminating the TXOP before the start time corresponding to the target time, and not initiating the competition for the TXOP during the time period corresponding to the target time; or
terminating the TXOP before the start time corresponding to the target time, and allowing competing for the TXOP using the first EDCA parameter set during the time period corresponding to the target time; or
allowing initiating transmission on the target channel and/or at the target time and transmitting a specified type frame to a second STA device, and/or prohibiting transmitting a frame other than the specified type frame to the second STA device, wherein the second STA device is a station which transmits transmission information to the third STA device in the transmission information monitored or received by the station of the first BSS from the second BSS, and a length of a response frame of the specified type frame is less than or equal to a frame length threshold.

60. The method according to claim 58, wherein restricting the transmission of the third STA device on the target channel and at the target time corresponding to a signal interference comprises:
terminating a TXOP on the target channel before a start time corresponding to the target time; or
controlling all stations of the second BSS to be in a silent state on the target channel during a time period corresponding to the target time; or
not initiating a competition for a TXOP on the target channel during the time period corresponding to the target time; or
competing for the TXOP on the target channel during the time period corresponding to the target time using a first EDCA parameter set, wherein a priority of the first EDCA parameter set is lower than a priority corresponding to a second EDCA parameter set used by a station of the BSS that has monitored or received transmission information from the second BSS, or lower than a priority corresponding to a general EDCA parameter set; or
terminating the TXOP on the target channel before the start time corresponding to the target time, and being in the silent state on the target channel during the time period corresponding to the target time; or
terminating the TXOP on the target channel before the start time corresponding to the target time, and not initiating the competition for the TXOP on the target channel during the time period corresponding to the target time; or
terminating the TXOP on the target channel before the start time corresponding to the target time, and allowing competing for the TXOP on the target channel during the time period corresponding to the target time using the first EDCA parameter set; or
allowing initiating transmission on the target channel and/or at the target time and transmitting a specified type frame to a second STA device, and/or prohibiting transmitting a frame other than the specified type frame to the second STA device on the target channel and/or at the target time; wherein the second STA device is a station which transmits transmission information to the third STA device in the transmission information monitored or received by the station of the first BSS from the second BSS, and a length of a response frame of the specified type frame is less than or equal to a frame length threshold.

61. The method according to claim 59 or 60, wherein the general EDCA parameter set is an MU EDCA parameter set.

62. The method according to any one of claims 58 to 61, wherein the information of the target resource comprises information of the target channel.

63. The method according to claim 62, wherein the target channel comprises all or part of channels used by a station of the first BSS that has monitored or received the transmission information from the second BSS.

64. The method according to claim 63, wherein the target channel is a working channel on a link corresponding to an r-TWT operation established in the first BSS.

65. The method according to any one of claims 58 to 64, wherein the target time is a time for a station of the first BSS that has monitored or received transmission information from the second BSS to perform channel competition and/or transmission.

66. The method according to claim 65, wherein information of the target time comprises:
information of a time period corresponding to a restricted target wake-up time (r-TWT) service period of a station of the first BSS that has monitored or received transmission information from the second BSS.

67. The method according to claim 66, wherein the information of the target time comprises:
information of a time period that overlaps with the r-TWT service period of the station of the first BSS that has monitored or received transmission information from the second BSS.

68. The method according to claim 66 or 67, wherein the channel resource protection enable notification frame comprises a protected period element; wherein
the protected period element comprises a protected period control field, a protected period count field, a protected period field, a protected period duration field, and a protected period offset field;
wherein the protected period control field is used to indicate a mode for restricting transmission corresponding to time information;
the protected period count field is used to indicate the number of TBTTs to reach a beacon interval where a start time of a next time period is located;
the protected period field is used to indicate the number of beacon intervals between start times of time periods;
the protected period duration field is used to indicate a duration of the time period; and
the protected period offset field is used to indicate an offset value between a start time of the time period and a TBTT defined by the protected period count field.

69. The method according to claim 68, wherein the protected period control field comprises a resource protection mode indication bitmap; wherein
each bit position in the resource protection mode indication bitmap corresponds to a resource protection mode, and a bit value of each bit position in the resource protection mode indication bitmap is used to indicate whether the corresponding resource protection mode is enabled.

70. The method according to any one of claims 58 to 69, wherein the method further comprises:
receiving a channel resource protection operation notification frame transmitted by the second AP device,wherein the channel resource protection operation notification frame is used to indicate that the third STA device terminates or restarts the restriction on the transmission on the target channel and/or at the target time.

71. The method according to claim 70, wherein the channel resource protection operation notification frame comprises an indication mark; wherein
the indication mark is used to indicate terminating or restarting the restriction on the transmission on the target channel and/or at the target time.

72. An apparatus for transmission, wherein the apparatus comprises:
a monitoring module, configured to monitor or receive a data unit on a first BSS channel, to obtain first monitoring or receiving condition information, wherein the first monitoring or receiving condition information is used to indicate transmission information of a first target station of a second BSS, which is monitored or received by the first STA device, and the first target station is a station whose initiated transmission influences on or interferes with a frame exchange in the first BSS by the first STA device; and
a reporting module, configured to report the first monitoring or receiving condition information to the first AP device of the first BSS.

73. An apparatus for transmission, wherein the apparatus comprises:
an information obtaining module, configured to obtain monitoring or receiving condition information, wherein the monitoring or receiving condition information is used to indicate transmission information of a target station of a second BSS, which is monitored or received by a station of the first BSS on the first BSS channel, and the target station is a station whose initiated transmission influences on or interferes with a frame exchange in the first BSS by the station of the first BSS; and
a transmitting module, configured to share information of a target resource and/or information of a target station with a second AP device of the second BSS according to the monitoring or receiving condition information, wherein the information of the target resource and/or the information of the target station is used for the second AP device to restrict transmission of a station of the second BSS on a target channel and/or at a target time, and the target channel and/or the target time is a channel and/or a time on which media access protection needs to be performed of the first BSS.

74. An apparatus for transmission, wherein the apparatus comprises:
a receiving module, configured to receive information of a target resource and/or information of a target station shared by a first AP device of a first BSS, wherein the information of the target resource and/or the information of the target station is shared by the first AP device according to monitoring or receiving condition information, the monitoring or receiving condition information is used to indicate transmission information of a target station of a second BSS monitored or received by a station of the first BSS, and the target station is a station whose initiated transmission influences on or interferes with a frame exchange in the first BSS by a station of the first BSS; and
a restricting module, configured to restrict transmission of a station of the second BSS on a target channel and/or at a target time according to the information of the target resource and/or the information of the target station, wherein the target channel and/or the target time is a channel and/or a time on which medium access protection needs to be performed of the first BSS.

75. An apparatus for transmission, wherein the apparatus comprises:
a receiving module, configured to receive a channel resource protection enable notification frame transmitted by a second AP device of a second BSS, wherein the channel resource protection enable notification frame is transmitted by the second AP device after receiving information of a target resource and/or information of a target station transmitted by a first AP device of a first BSS, the information of the target resource and/or the information of the target station is shared by the first AP device according to monitoring or receiving condition information, the monitoring or receiving condition information is used to indicate transmission information of a target station of the second BSS, which is monitored or received by a station of the first BSS, and the target station is a station whose initiated transmission influences on or interferes with a frame exchange in the first BSS by the station of the first BSS; and
a restricting module, configured to restrict transmission of a third STA device on a target channel and/or at a target time according to the channel resource protection enable notification frame, wherein the target channel and/or the target time is a channel and/or a time on which medium access protection needs to be performed of the first BSS.

76. A STA device, wherein the STA device is a first STA device of a first BSS, the first STA device is a non-AP STA, and the STA device comprises a processor, a memory, and a transceiver; wherein
the transceiver is configured to: monitor or receive a data unit on a first BSS channel, to obtain first monitoring or receiving condition information, wherein the first monitoring or receiving condition information is used to indicate transmission information of a first target station of a second BSS, which is monitored or received by the first STA device, and the first target station is a station whose initiated transmission influences on or interferes with a frame exchange in the first BSS by the first STA device; and report the first monitoring or receiving condition information to the first AP device of the first BSS.

77. An AP device, wherein the AP device is an AP device of a first BSS, and the AP device comprises a processor,
a memory and a transceiver; wherein
the transceiver is configured to: obtain monitoring or receiving condition information, wherein the monitoring or receiving condition information is used to indicate transmission information of a target station of a second BSS, whichis monitored or received by a station of the first BSS on a first BSS channel, the target station is a station whose initiated transmission influences on or interferes with a frame exchange in the first BSS by a station of the first BSS; and share information of a target resource and/or information of the target station with a second AP device of the second BSS according to the monitoring or receiving condition information, wherein the information of the target resource and/or the information of the target station is used for the second AP device to restrict transmission of a station of the second BSS on a target channel and/or at a target time, and the target channel and/or the target time is a channel and/or a time on which media access protection needs to be performed of the first BSS.

78. An AP device, wherein the AP device is an AP device of a second BSS, and the AP device comprises a processor, a memory and a transceiver; wherein
the transceiver is configured to receive information of a target resource and/or information of a target station shared by a first AP device of a first BSS, wherein the information of the target resource and/or the information of the target station is shared by the first AP device according to monitoring or receiving condition information, the monitoring or receiving condition information is used to indicate transmission information of the target station of the second BSS, which is monitored or received by a station of the first BSS, and the target station is a station whose initiated transmission influences on or interferes with a frame exchange in the first BSS by the station of the first BSS; and
the processor is configured to restrict transmission of a station of the second BSS on a target channel and/or at a target time according to the information of the target resource and/or the information of the target station, wherein the target channel and/or target time is a channel and/or a time on which medium access protection needs to be performed of the first BSS.

79. A STA device, wherein the STA device is a third STA device of a second BSS, the third STA device is a non-AP STA, and the STA device comprises a processor, a memory, and a transceiver; wherein
the transceiver is configured to receive a channel resource protection enable notification frame transmitted by a second AP device of the second BSS, wherein the channel resource protection enable notification frame is transmitted by a second AP device after receiving information of a target resource and/or information of a target station transmitted by a first AP device of a first BSS, the information of the target resource and/or the information of the target station is shared by a first AP device according to monitoring or receiving condition information, the monitoring or receiving condition information is used to indicate transmission information of a target station of the second BSS, which is monitored or received by a station of the first BSS, and the target station is a station whose initiated transmission influences on or interferes with a frame exchange in the first BSS by a station of the first BSS; and
the processor is configured to restrict transmission of the third STA device on a target channel and/or at a target time according to the channel resource protection enable notification frame, wherein the target channel and/or the target time is a channel and/or a time on which medium access protection needs to be performed of the first BSS.

80. A computer-readable storage medium, wherein a computer program is stored in the storage medium, and the computer program, when being executed by a processor, causes a computer device to perform the method according to any one of claims 1 to 14, or the method according to any one of claims 15 to 33, or the method according to any one of claims 34 to 57, or the method according to any one of claims 58 to 71.

81. A chip, comprising: a processor, configured to call a computer program from a memory and run the computer program, to cause a computer device equipped with the chip to perform the method according to any one of claims 1 to 14, or the method according to any one of claims 15 to 33, or the method according to any one of claims 34 to 57, or the method according to any one of claims 58 to 71.

82. A computer program product, comprising computer instructions, wherein the computer instructions are stored in a computer-readable storage medium, a processor of a computer device reads the computer instructions from the computer-readable storage medium and executes the computer instructions, to cause the computer device to perform the method according to any one of claims 1 to 14, or the method according to any one of claims 15 to 33, or the method according to any one of claims 34 to 57, or the method according to any one of claims 58 to 71.

83. A computer program, wherein the computer program is executed by a processor of a computer device, to cause the computer device to perform the method according to any one of claims 1 to 14, or the method according to any one of claims 15 to 33, or the method according to any one of claims 34 to 57, or the method according to any one of claims 58 to 71.
